# EUROPEAN PATENT APPLICATION

(11) **EP 4 693 145 A1**
(43) Date of publication of application: **11.02.2026**
(21) Application number: 23931525.2
(22) Date of filing: 07.04.2023
(51) Int. Cl.: G06Q 30/02, G06N 20/00, H04W 64/00, H04W 4/02

(54) **MODEL MONITORING METHOD AND APPARATUS, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); HUANG, Yingpei, Dongguan, Guangdong 523860 (CN); LIU, Wendong, Dongguan, Guangdong 523860 (CN)
(74) Representative: Aldridge, Henry Alexander
(86) International application number: PCT/CN2023/086995
(87) International publication number: WO 2024/207464

(57) **Abstract**

Provided in the embodiments of the present application are a model monitoring method and apparatus, and a communication device. The method comprises: a first device determining a similarity comparison result between an input data set and a training data set of a first model, wherein the similarity comparison result is used for determining the performance of the first model.

## Description

### TECHNICAL FIELD

The embodiments of the present disclosure relate to the technical field of mobile communication, particularly to a model monitoring method and device, and a communication device.

### BACKGROUND

In view of the great success of the Artificial Intelligence (Al) technology/Machine Learning (ML) in computer vision, natural language processing, etc., AI/ML technology is started to be used in the field of communication to seek new technical ideas to solve the technical problems of limited traditional methods.

How to monitor the performance of AI/ML model in the field of communication is a concerned subject in the present field.

### SUMMARY

The embodiments of the present disclosure provide a model monitoring method and device, and a communication device, to improve the feasibility and flexibility of model monitoring.

An embodiment of the present disclosure provides a model monitoring method, and the method includes following operation.

The first device determines a similarity comparison result between an input data set and a training data set of a first model. The similarity comparison result is used for determining a performance of the first model.

An embodiment of the present disclosure provides a model monitoring device, which is applied to the first device, and the device includes a determination unit.

The determination unit is configured to determine a similarity comparison result between an input data set and a training data set of a first model. The similarity comparison result is used for determining a performance of the first model.

An embodiment of the present disclosure provides a communication device, and the communication device includes a processor and a memory. The memory is configured to store a computer program, and the processor is configured to call and run the computer program stored in the memory to perform the above-mentioned method.

An embodiment of the present disclosure provides a chip, which is configured to implement the above-mentioned model monitoring method.

Specifically, the chip includes a processor. The processor is configured to call and run a computer program from a memory to enable a device installed with the chip to perform the above-mentioned model monitoring method.

An embodiment of the present disclosure provides a computer-readable storage medium which is configured to store a computer program. The computer program causes the computer to perform the above-mentioned model monitoring method.

An embodiment of the present disclosure provides a computer program product including computer program instructions. The computer program instructions cause a computer to perform the above-mentioned model monitoring method.

An embodiment of the present disclosure provides a computer program which, when running on the computer, causes the computer to perform the above-mentioned model monitoring method.

With the model monitoring method provided by the embodiment of the present disclosure, when the first device monitors the first model, the first device compares similarity between the input data set of the first model and the training data set of the first model without collecting label information corresponding to the input data, and determines the performance of the first model by using the similarity comparison result. In this way, the model monitoring is implemented in a scenario in which the label information corresponding to the input data cannot be collected, thereby the feasibility and flexibility of model monitoring.

### BRIEF DESCRIPTION OF THE DRAWINGS

The accompanying drawings described herein are used to provide a further understanding of the present disclosure and form a part of the present disclosure. The schematic embodiments of the present disclosure and the description thereof are used to explain the present disclosure and do not constitute an improper limitation of the present disclosure. In the drawings:
FIG. 1 is a schematic communication flowchart of a wireless communication system according to an embodiment of the present disclosure;
FIG. 2A is a schematic principle diagram of a downlink-based positioning method according to an embodiment of the present disclosure;
FIG. 2B is a schematic principle diagram of an uplink-based positioning method according to an embodiment of the present disclosure;
FIG. 3 is a schematic structural diagram of a neuron according to the related art;
FIG. 4 is a schematic structural diagram of a neural network according to the related art;
FIG. 5 is a schematic structural diagram of a convolutional neural network according to the related art;
FIG. 6 is a schematic structural diagram of a Long Short-Term Memory (LSTM) according to the related art;
FIG. 7A is a schematic principle diagram of direct positioning of the AI/ML model according to an embodiment of the present disclosure;
FIG. 7B is a schematic principle diagram of assisted positioning of the AI/ML model according to an embodiment of the present disclosure;
FIG. 8 is a first schematic flowchart of a model monitoring method according to an embodiment of the present disclosure;
FIG. 9 is a second schematic flowchart of a model monitoring method according to an embodiment of the present disclosure;
FIG. 10 is a third schematic flowchart of a model monitoring method according to an embodiment of the present disclosure;
FIG. 11A to FIG. 11D are schematic structural diagrams of a distribution of sub-models according to an embodiment of the present disclosure;
FIG. 12 is a schematic structural diagram of a composition of a model monitoring device 1200 according to an embodiment of the present disclosure;
FIG. 13 is a schematic structural diagram of a composition of a communication device according to an embodiment of the present disclosure; and
FIG. 14 is a schematic structural diagram of a chip according to an embodiment of the present disclosure.

### DETAILED DESCRIPTION

The technical solutions of the embodiments of the disclosure are described below with reference to the accompanying drawings in the embodiments of the disclosure, and it is apparent that the described embodiments are part of the embodiments of the disclosure, rather than all of them. Based on the embodiments in the disclosure, any other embodiments obtained by those of ordinary skill in the art without making creative effort fall within the scope of protection of the disclosure.

In order to facilitate understanding of the technical solutions of the embodiments of the present disclosure, the related technologies of the embodiments of the present disclosure will be described below. The following related technologies as an optional solution may be arbitrarily combined with the technical solutions of the embodiments of the present disclosure, and all of them belong to the scope of protection of the embodiments of the present disclosure.

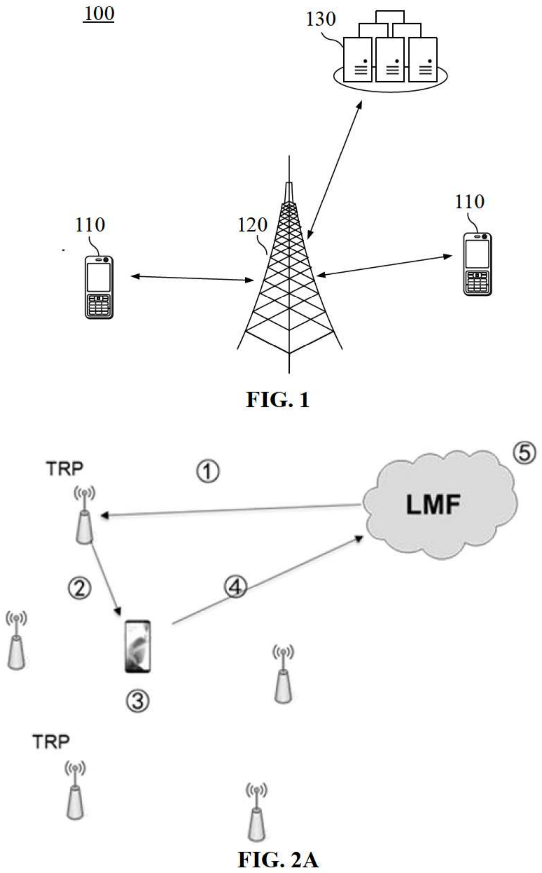

FIG. 1 is a schematic diagram of an application scenario according to an embodiment of the present disclosure.

As illustrated in FIG. 1, the communication system 100 includes a terminal device 110 and a network device 120. The network device 120 may communicate with the terminal device 110 through an air interface. The multi-service transmission is supported between the terminal device 110 and the network device 120.

It is to be understood that the embodiments of the present disclosure are only illustrated with reference to the communication system 100, however, the embodiments of the present disclosure are not limited thereto. That is, the technical solution of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, and a Narrow Band Internet of Things (NB-IoT) System, an enhanced Machine-Type Communications (eMTC) system, a 5G communication system (also referred to as New Radio (NR) communication system), or future communication systems, etc.

In the communication system 100 illustrated in FIG. 1, the network device 120 may be an access network device that communicates with the terminal device 110. The access network device may provide communication coverage for a particular geographic area and may communicate with the terminal device 110 (such as UE) located within the coverage area.

The network device 120 may be an Evolutionary Node B (eNB, or eNodeB) in a Long Term Evolution (LTE) system, a Next Generation Radio Access Network (NG RAN) device, a base station (gNB) in an NR system, a radio controller in a Cloud Radio Access Network (CRAN), or the network device 120 may be a relay station, an access point, an in-vehicle device, a wearable device, a hub, a switch, a bridge, a router, or a network device in a future evolved Public Land Mobile Network (PLMN).

The terminal device 110 may be any terminal device including, but not limited to, a terminal device connected with the network device 120 or other terminal device using wired or wireless connection.

For example, the terminal device 110 may be referred to as an access terminal, a User Equipment (UE), a subscriber unit, a subscriber station, a mobile console, a mobile station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a hand-held device having a wireless communication function, a computing device or another processing device connected to a wireless modem, an on-board device, a wearable device, a terminal device in a 5G network, a terminal device in future evolution, etc.

The terminal device 110 may be used for the device-to-device (D2D) communication.

The wireless communication system 100 may further include a core network device 130 that communicates with the network device 120, and the core network device 130 may be a 5-th Generation Core (5GC) device, for example, an Access and Mobility Management Function (AMF), an Authentication Server Function (AUSF), a User Plane Function (UPF), a Session Management Function (SMF). Alternatively, the core network device 130 may also be an Evolved Packet Core (EPC) device of an LTE network, for example, a Session Management Function + Core Packet Gateway (SMF + PGW-C) device of the core network. It is to be understood that the SMF + PGW-C may implement the functions implemented by both the SMF and PGW-C. In the evolution process of the network, the above-mentioned core network device may be called by other names, or a new network entity may be formed by dividing the functions of the core network, which is not limited by the embodiments of the present disclosure.

The connection between the functional units of the communication system 100 may be established through a next generation (NG) interface to implement the communication.

For example, the terminal device establishes an air interface connection with the access network device through the NR interface for transmitting the user plane data and the control plane signaling. The terminal device may establish a control plane signaling connection with the AMF through the NG interface 1 (N1 for short). The access network device, such as a next generation radio access base station (gNB), may establish a user plane data connection with the UPF through an NG interface 3 (N3 for short). The access network device may establish a control plane signaling connection with the AMF through the NG interface 2 (N2 for short). The UPF may establish a control plane signaling connection with the SMF through the NG interface 4 (N4 for short). The UPF may interact the user plane data with the data network through the NG interface 6 (N6 for short). The AMF may establish a control plane signaling connection with the SMF through the NG interface 11 (N11 for short). The SMF may establish a control plane signaling connection with the PCF through the NG interface 7 (N7 for short).

FIG. 1 exemplarily illustrates one network device, one core network device and two terminal devices. Alternatively, the wireless communication system 100 may include a plurality of network devices and other numbers of terminal devices may be included within the coverage of each network device, which is not limited in the embodiments of the present disclosure.

It is to be noted that FIG. 1 schematically illustrates the system to which the present disclosure is applicable by way of example, and of course, the methods illustrated in the embodiments of the present disclosure may also be applied to other systems. In addition, the terms "system" and "network" in the present disclosure are often used interchangeably herein. The term "and/or" herein merely describes an association relationship of the associated objects and represents that three relationships may exist. For example, A and/or B may represent the following three cases: only A exists, both A and B exist, and only B exists. Further, the character "/" herein generally means that the associated objects have an "or" relationship. It is further to be understood that the "indicating" mentioned in the embodiments of the present disclosure may be a direct indication, or an indirect indication, and may also represent that there is an association relationship. For example, A indicates B, which may mean that A directly indicates B, for example, B may be acquired through A. It may also mean that A indicates B indirectly, for example, A indicates C, and B may be acquired through C. It may also indicate that there is an association relationship between A and B. It is further to be understood that the "corresponding" mentioned in the embodiments of the present disclosure may indicate that there is a direct correspondence or indirect correspondence between the two items, may also indicate that there is a correlation relationship between the two items, or may indicate a relationship between indicating and being indicated, configuring and being configured, or the like. It is further to be understood that the "predefined" or "predefined rule" mentioned in the embodiments of the present disclosure may be implemented by storing the corresponding codes, tables, or other manners that can be used for indicating relevant information in advance in the device (including, for example, the terminal device and the network device), and the specific implementations thereof are not limited in the present disclosure. For example, "predefined" may refer to being defined in the protocol. It is further to be understood that the "protocol" in the embodiments of the present disclosure may refer to a standard protocol in the field of communication, and may include, for example, an LTE protocol, an NR protocol, and related protocols applied in future communication systems, which is not limited in the present disclosure.

In order to facilitate understanding of the technical solutions of the embodiments of the present disclosure, the related technologies of the embodiments of the present disclosure will be described below. The following related technologies may be, as an optional solution, arbitrarily combined with the technical solutions of the embodiments of the present disclosure, and all of them belong to the scope of protection of the embodiments of the present disclosure.

In the practical application, the positioning method for a terminal device may include a UE-based positioning method, a UE-assisted/Location Management Function (LMF) network element (LMF-based) positioning method, and a positioning method based on access network node assisted (NG-RAN node assisted).

In the UE-based positioning method, the terminal device directly calculates the position of the target UE.

In the UE-assisted/LMF-based positioning method, the terminal device reports the measurement result to the LMF, and the LMF calculates the position of the target UE based on the collected measurement result.

In the positioning method based on NG-RAN node assisted, the base station reports the measurement result of the Transmission/Reception Point (TRP) to the LMF, and the LMF calculates the position of the target UE based on the collected measurement result.

It is to be noted that a plurality of TRPs around the terminal device may participate in location positioning, one base station may be one TRP, and there may be a plurality of TRPs under one base station. The LMF may be a positioning server that is responsible for the entire positioning process.

In the traditional positioning method, the terminal device or LMF applies traditional algorithms, such as Chan algorithm, Taylor expansion and other algorithms, to estimate the position of the terminal device.

The downlink-based positioning method and the uplink-based positioning method are described below, respectively.

Referring to FIG. 2A, the downlink-based positioning method may include the following steps.

At step 1, the LMF network element notifies the configuration related to the TRP.

The configuration may include the configuration information of the PRS and/or the information such as a type of measurement result to be reported by the terminal device.

At step 2, the TRP transmits the PRS.

At step 3, the terminal device receives a positioning signal PRS and performs measurement.

It is to be noted that the measurement results required by the terminal device are different in different positioning methods.

At step 4, the terminal device feeds the measurement result back to the LMF.

The terminal device feeds the measurement result back to the LMF through the base station.

At step 5, the LMF calculates information about the position.

It is to be noted that the foregoing is a schematic flow of the UE-assisted positioning method. In the UE-based positioning method, the terminal device calculates the information about the position in the step 4 as described above based on the measurement result without reporting the measurement result to the LMF and calculating by the network element LMF. In the UE-based positioning method, the terminal device should know the position information corresponding to the TRP, so it is required for the LMF to notify the terminal device of the position information corresponding to the TRP in advance.

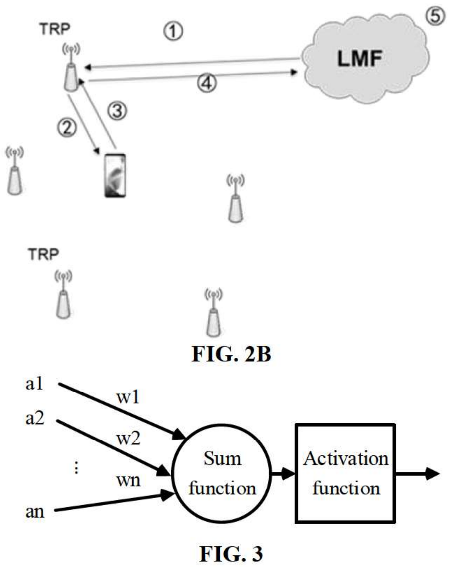

In addition, referring to FIG. 2B, the uplink-based positioning method may include the following steps.

At step 1, the LMF notifies the related configuration to the TRP.

At step 2, the TRP transmits the related signaling to the terminal device.

At step 3, the terminal device sends a Sounding Reference Signal (SRS).

At step 4, the TRP measures the SRS and transmits the measurement result to the LMF.

At step 5, the LMF calculates information about the position.

The essence of AI/ML technology is to enable the computer to learn the rules from the data by itself and predict the future data according to the obtained rules. The AI/ML research represented by the neural network has made great achievements in many fields, and will also play an important role in people's production and life for a long time to come.

Referring to the schematic diagram of a neuronal structure illustrated in FIG 3, the neural network is an operation model composed of a plurality of neuron nodes connected to each other. As illustrated in FIG. 3, the neuronal structure may be connected to other neuronal structures a1 to an. The transmission of signals between the neuronal structures is affected by a weight (for example, the weight value of the signal inputted by neuronal structure a1 is w1), and each neuronal structure may calculate a weighted sum of a plurality of input signals and output through a specific activation function.

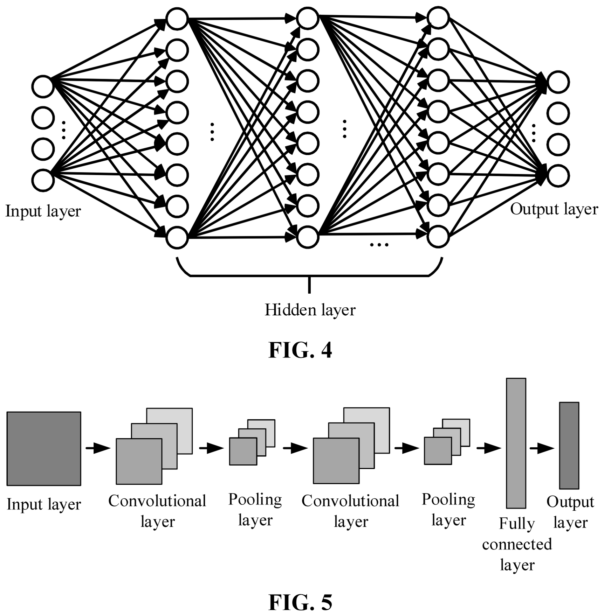

FIG. 4 is a schematic structural diagram of a neural network proposed in the related art. As illustrated in FIG. 4, the structure of the neural network may include an input layer, a hidden layer, and an output layer. As illustrated in FIG. 4, the input layer is used for receiving data, and the hidden layer is used for processing the data, and a result is generated at the output layer. Each node represents a processing unit, which may be considered to simulate a neuron. Multiple neurons form a layer of neural network, and multi-layer information transmission and processing construct an overall neural network.

With the continuous development of neural network research, the neural network deep learning algorithms have been further proposed in recent years, and more hidden layers are introduced. The feature learning is performed by layer-by-layer training via the neural network having multiple hidden layers, which greatly improves the learning and processing capabilities of the neural network, and is widely used in pattern recognition, signal processing, optimization combination, anomaly detection, etc.

Similarly, with the development of deep learning, the Convolutional Neural Networks (CNN) have also been further studied.

FIG. 5 is a schematic structural diagram of a convolutional neural network provided by the related art. As illustrated in FIG. 5, the structure of the convolutional neural network may include an input layer, a plurality of convolutional layers, a plurality of pooling layers, a fully connected layer, and an output layer. With the introduction of convolution layer and pooling layer, the dramatic increase of network parameters is effectively controlled, the number of parameters is limited, the characteristics of local structure are mined, and the robustness of the algorithm is improved.

The recurrent neural network has made remarkable achievements in the field of natural language processing, such as machine translation and speech recognition. The recurrent neural network is a neural network that models the sequence data, which memorizes the information of the past moment, and is used in the calculation of the current output. That is, the nodes between hidden layers are no longer unconnected but connected, and the input of the hidden layer includes not only the input layer but also the output of the hidden layer at the previous moment.

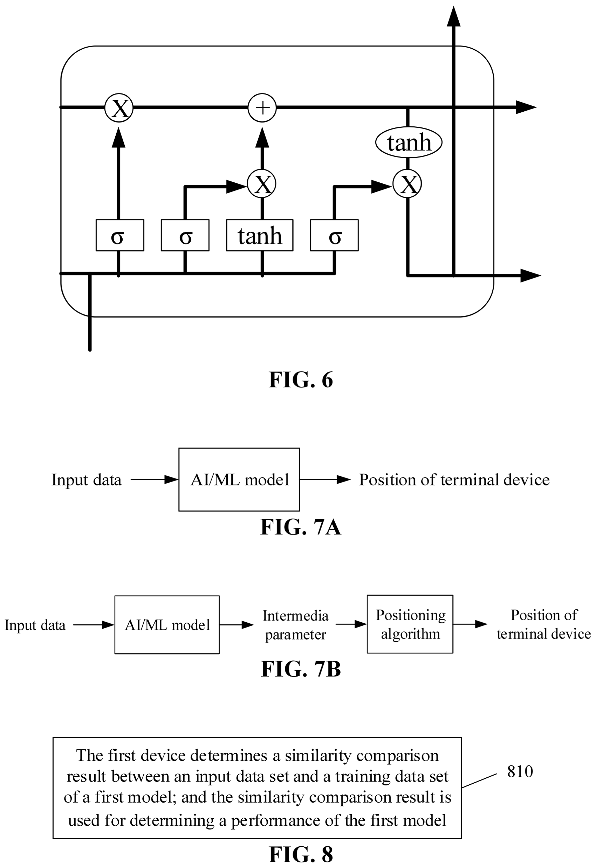

FIG. 6 is a schematic structural diagram of a Long Short-Term Memory (LSTM) provided in the related art. The LSTM is a common recurrent neural network. Unlike the recurrent neural network which only consider the most recent state, the LSTM determines which states should be kept and which states should be forgotten, such that the defects of traditional recurrent neural networks in the long-term memory are solved.

In the AI/ML technology, an AI/ML model may be constructed based on the neural networks introduced in the above embodiments, and the AI/ML model may be trained so that the AI/ML model may learn the rules from a large amount of data, so that the trained AI/ML model can predict future data by using the learned rules.

It is to be understood that the AI/ML model may trained based on a training data set (Train Data). The training data set is a data set having relatively accurate feature description by adding/labeling (including manually adding/labeling and non-manually adding/labeling) label information. That is, the label information may be information describing the feature of each data in the training data set. For example, when the AI/ML model is used for positioning for a terminal device, the AI/ML model may be trained by using a training data set added with location label of the terminal device.

In practical applications, the training data set generally have the characteristics of large amount of data, data diversity and high data quality.

In addition, the input data set may be understood as the data set which is predicted by using the AI/ML model. After the input data in the input data set is processed by the AI/ML model, the prediction result expected by a user may be obtained.

In view of the great success of the AI technology or ML technology, such as the above-mentioned neural network and deep learning, in the computer vision, natural language processing, etc., the AI technology is started to be used in the communication field to seek new technical ideas to solve the technical problems limited by the traditional methods.

In practical applications, the AI/ML technology may be used to implement positioning/channel estimation or other functions of terminal device. That is, the AI/ML model may be combined with any positioning method/channel estimation method to, as a replacement of the traditional positioning method/channel estimation method, estimate the position/channel state of the terminal device.

It is to be noted that the AI/ML model may directly output the position/channel state of the terminal device, or may assist in determining the position/channel state of the terminal device. For example, the description is given with taking the AI/ML model as a positioning model. The AI/ML model is combined with the positioning method, which may be distinguished into AI/ML direct positioning and AI/ML assisted positioning. In the AI/ML model direct positioning, as illustrated in FIG. 7A, the AI/ML model may directly output the position of the terminal device according to the input data of the model. In the AI/ML model indirect positioning, as illustrated in FIG. 7B, the AI/ML model may first output the intermediate parameter according to the input data of the model, and then determine the position of the terminal device in combination with the intermediate parameter and the positioning algorithm.

When the AI/ML model is not suitable for the current scenario, that is, the processing accuracy of the AI/ML model does not meet the actual requirements, the AI/ML model needs to be updated. The key of updating AI/ML model lies in how to monitor the performance of AI/ML model.

The monitoring for the AI/ML model is to monitor the accuracy of output data of AI/ML model. Generally, the AI/ML model monitoring method is a monitoring method based on label information. In the method, the label information of the input data is collected and the output result of the AI/ML model is compared with the label information to monitor the accuracy of the AI/ML model. Therefore, in order to monitor the performance of AI/ML model, it is necessary to collect the input data and corresponding label information for model monitoring. However, in practical applications, it is difficult to obtain the label information corresponding to the input data of AI/ML model. Especially when the AI/ML model is a positioning model, the position label of the terminal device is required. However, the location of the terminal device is private information, and at present there is no effective method to obtain the location of the terminal device. Therefore, how to monitor the performance of AI/ML model without the label information corresponding to the input data is an urgent problem to be solved.

Based on above, the embodiments of the present disclosure provide a model monitoring method. FIG. 8 is a schematic flow diagram of the model monitoring method provided by the embodiment of the present disclosure. As illustrated in FIG. 8, the method includes the following operation 810.

At operation 810, the first device determines a similarity comparison result between an input data set and a training data set of a first model. The similarity comparison result is used for determining a performance of the first model.

It is to be understood that the first device may monitor the performance of the first model. In other words, monitoring the performance of the first model is performed by the first device. The first model may be deployed in the first device, and the first device may monitor the performance of the deployed first model, determine whether the performance of the first model meets the actual requirement, and update the first model in time when the performance of the first model does not meet the actual requirement.

It is to be noted that the first device may be a first terminal device or a network device. The network device may include an access network device, such as a base station, a micro base station, etc. The network device may also include a core network device, such as an LMF, or other network element having a positioning management function, which is not limited in the embodiments of the present disclosure.

The first terminal device may be a terminal device to be processed (for example, a terminal device to be positioned, a terminal device of which the channel estimation information is to be determined), or a terminal device having processing requirement (for example, a terminal device having positioning requirement, or a terminal device having channel estimation requirement), or a terminal device deployed with a first model.

It is to be understood that the first model may be deployed in the first terminal device and/or the network device. When the first model is deployed in the first terminal device, the first terminal device may monitor the performance of the first model. When the first model is deployed in an access network device (such as a gNB), the access network device may monitor the performance of the first model. When the first model is deployed in a core network device (such as LMF), the core network device may monitor the performance of the first model. When the first model is deployed in both the first terminal device and the network device (including the access network device and/or the core network device), both the first terminal device and the network device may monitor the performance of the first model.

In some embodiments, the first model may be used to directly determine the channel state, or assist in determining the channel state, and in this scenario, the first model may be referred to as a channel estimation model. Further, the first model may also be used for direct positioning/assisted positioning, and in this scenario, the first model may be referred to as a positioning model. The type of the first model is not limited in the embodiments of the present disclosure.

The first model mentioned in the embodiments of the present disclosure may be a pre-trained AI/ML model, such as a neural network model, a CNN model, a Deep Neural Network (DNN) model, an LSTM model, etc., which is not limited in the embodiments of the present disclosure.

In the embodiments of the present disclosure, the first model may be trained by a training data set of the first model. The training data set may include a large amount of training data. Each training data may include corresponding label information. The label information may accurately describe the features of the training data.

In an example, in a scenario in which the first model is used for direct positioning/assisted positioning of the first terminal device, the training data set of the first model may include the measurement parameter related to the position between a second terminal device and one or more network devices, and the label information corresponding to each measurement parameter. The measurement parameter related to the position between the second device and the one or more network devices may include one or more of: a Channel Impulse Response (CIR), a Power Delay Profile (PDP), a Time of Arrival (ToA), a path phase, an Uplink Time Difference of Arrival (UL TDoA), a Downlink time Difference of Arrival (DL TdoA), an uplink angle-of-departure (UL AoD), a Downlink Angle-of-Departure (DL AoD), a UL Relative Time of Arrival (UL RTOA), a DL Reference Signal Time Difference (DL RSTD), a Reference Signal Receiving Power (RSRP), a Reference Signal Receiving Quality (RSRQ), an azimuth, and a zenith between the second terminal device and the network device.

If the first model is used for direct positioning, the label information corresponding to each measurement parameter may be the position of the second terminal device associated with the measurement parameter.

If the first model is used for assisted positioning, the label information corresponding to each measurement parameter may include at least one of: a ToA, a DL TdoA, a DL AoD, a DL RSTD, a UL TdoA, a UL AoD, a UL RTOA, a RSRP, a RSRQ, a Line of Sight/Non-Line of Sight (LOS/NLOS) identification, distance information between the second terminal device and the network device associated with the measurement parameter.

In another example, in a scenario in which the first model is used for directly determining the channel state, the training data set of the first model may include the measurement parameter regarding a state of the channel between the second terminal device and the network device, and the label information corresponding to each measurement parameter. The measurement parameter regarding the state of the channel between the second device and the one or more network devices may include one or more of: an RSRP, an RSRQ, a Signal to Interference plus Noise Ratio (SINR), etc. Accordingly, the label information corresponding to each parameter may be state information of the channel between the second terminal device and the network device.

It is to be noted that the "training data set" mentioned in the embodiments of the present disclosure refers to the training data set of the first model. Further, the "input data set" mentioned in the embodiments of the present disclosure refers to the input data set of the first model.

It is to be understood that the first model is a model obtained by training based on the training data set. The process of training the first model may be understood as enabling the output result obtained after the training data is processed through the first model to be consistent/matched with the label information corresponding to the training data. In this way, when any input data is input to the trained first model, the trained first model may obtain an output result of same type as the label information in the training data set.

In a scenario in which the first model is a channel estimation model, the label information of each training data in the training data set of the first model may be channel state information, so that the trained first model may process the input data and output the channel state information.

It is to be noted that the first model may be obtained by training based on a training data set by a first device which performs model monitoring, or may be obtained by training based on a training data set by another device, which is not limited in the embodiments of the present disclosure.

It is further to be noted that when the first device for monitoring the first model and the device for training the first model are different devices, the training data set for the first model may be acquired by the first device from the device for training the first model, or the training data for the first model may be transmitted by the device which trains the first model to the first device. Exemplarily, the first model is deployed in the first terminal device, the first terminal device monitors the first model, the first model may be obtained by training via the LMF. In this case, the LMF may transmit a training data set for training the first model to the first terminal device, so that the first terminal device may monitor the performance of the first model based on the training data set.

In an embodiment of the present disclosure, when the first device monitors the performance of the first model, the first device may acquire the input data set (model input data set) of the first model. The input data set may include a large amount of input data. The first model may process the input data in the input data set and output an output result of a same type as the label information included in the training data set.

The input data set may be of the same type as the training data set, and the input data in the input data set may not include the label information.

In an example, in a scenario in which the first model is used for direct positioning/assisted positioning for the first terminal device, the input data set of the first model may include the measurement parameter related to the position between the first terminal device (i.e., a terminal device to be positioned) and one or more network devices. Accordingly, in a scenario in which the first model is used for directly positioning for the first terminal device, the first model may process the input data and output the position of the first terminal device. In a scenario in which the first model is used for assisted positioning for the first terminal device, the first model may process input data and output an intermediate parameter of the first terminal device, and the intermediate parameter includes but is not limited to: a ToA, a DL TdoA, a DL AoD, a DL RSTD, a UL TdoA, a UL AoD, a UL RTOA, an RSRP, an RSRQ, an LOS/NLOS identification, and distance information between the first terminal device and the network device.

In another example, in a scenario in which the first model is used for directly determining the channel state, the input data set of the first model may include the measurement parameter regarding the state of the channel between the first terminal device (i.e., a terminal device of which the channel state is to be determined) and the network device. Accordingly, after processing the input data in the input data set, the first model may output the state information of the channel between the first terminal device and the network device.

It is to be understood that the first model is obtained by training based on the training data set, and the label information of each training data in the training data set may be regarded as an output result of the first model with the highest accuracy. Therefore, when the first device monitors the performance of the first model, the input data set may be compared with the training data set. If the two data sets are similar, it may be considered that after the input data set is processed by the first model, an output result with high accuracy may also be obtained, and the performance of the first model is good. If the two data sets are not similar, it may be considered that after the input data set is processed by the first model, the output result with high accuracy cannot be obtained, and the performance of the first model is poor.

It is to be noted that the input data set of the first model may include only a plurality of input data, and may not include an output result corresponding to each of the plurality of input data and the label information corresponding to the input data.

It is further to be noted that, unless otherwise defined, the "similarity comparison result" described in the embodiments of the present disclosure may be replaced with other similar meanings generally understood by those skilled in the art. For example, the "similarity comparison result" described in the embodiments of the present disclosure may also be replaced with "comparison result", "matching result", "matching degree", "validity result" (specifically, it may refer to the validity of the input data set), etc. Accordingly, the expression "the input data set is/is not similar to the training data set" described in the embodiments of the present disclosure may also be replaced with the description such as "the input data set is/is not matched with the training data set" or "the input data set is valid/invalid". It is to be understood that the terms used herein are for the purpose of describing the disclosure only and are not intended to limit the present disclosure.

As set forth above, in the model monitoring method provided by the embodiment of the present disclosure, when monitoring the first model, the first device may not collect the label information corresponding to the input data, but only compare the similarity between the input data set of the first model and the training data set of the first model, and determine the performance of the first model by using the similarity comparison result. In this way, the model monitoring is implemented in a scenario in which the label information corresponding to the input data cannot be collected, thereby improving the feasibility and flexibility of model monitoring.

In an embodiment of the present disclosure, the first model may be used for direct positioning/assisted positioning for the terminal device. Referring to FIG. 7A, when the first model is used for direct positioning for the terminal device, the location of the terminal device may be output. Referring to FIG. 7B, when the first model is used for assisted positioning for the terminal device, the intermediate parameter of the terminal device may be output, and the location of the terminal device may be obtained by combining the intermediate parameter with the positioning algorithm.

In a scenario in which the first model is used for direct positioning/assisted positioning for the first terminal device, the training data set of the first model may include the measurement parameter between the second terminal device and one or more network devices, and the label information corresponding to each measurement parameter.

The measurement parameter between the second device and the one or more network devices may include one or more of: a Channel Impulse Response (CIR) between the second terminal device and the network device, a Power Delay Profile (PDP), a Time of Arrival (ToA), a path phase, an Uplink Time Difference of Arrival (UL TDoA), a Downlink time Difference of Arrival (DL TdoA), an uplink angle-of-departure (UL AoD), an Downlink Angle-of-Departure (DL AoD), a UL Relative Time of Arrival (UL RTOA), a DL Reference Signal Time Difference (DL RSTD), a Reference Signal Receiving Power (RSRP), a Reference Signal Receiving Quality (RSRQ), an azimuth, and a zenith.

If the first model is used for direct positioning, the label information corresponding to each measurement parameter may be the position of the second terminal device associated with the measurement parameter.

If the first model is used for assisted positioning, the label information corresponding to each measurement parameter may include at least one of: a ToA, a DL TdoA, a DL AoD, a DL RSTD, a UL TdoA, a UL AoD, a UL RTOA, a RSRP, a RSRQ, a Line of Sight/Non-Line of Sight (LOS/NLOS) identification, distance information between the second terminal device and the network device associated with the measurement parameter.

It is to be noted that the second terminal device may be a terminal device added with label information. There may be a plurality of second terminal devices. The measurement parameter between one second device and one or more network devices may be understood as one training data of the training data set.

In a scenario where the first model is used for direct positioning/assisted positioning for a terminal device, the input data set of the first model may include a measurement parameter associated with the position of the terminal device.

It is to be noted that the measurement parameter may be a measurement parameter between the terminal device and one or more network devices. Specifically, the measurement parameter may be a parameter, that may be measured when the terminal device performs signal transmission with one or more network devices, for positioning the terminal device.

The measurement parameter may be measured by the terminal device or the network device, which is not limited in the embodiments of the present disclosure.

In some embodiments, the measurement parameter includes one or more of: a CIR, a PDP, a ToA, a path phase, a UL TDoA, a DL TdoA, a UL AoD, a DL AoD, a UL RTOA, a DL RSTD, an RSRP, an RSRQ, an azimuth, and a zenith.

In an example, when the first device for monitoring the first model is a terminal device, the terminal device may measure a downlink reference signal (for example, a positioning reference signal (PRS), a synchronization signal block (SSB), a channel state information reference signal (CSI-RS), etc.) transmitted by one or more network devices, to obtain the downlink measurement parameter of the terminal device with respect to one or more network devices, and the downlink measurement parameter includes but is not limited to: a CIR, an RSRP, a DL RSTD, a TOA, a DL TDOA, and a DL RSTD of the terminal device with respect to one or more network devices.

It is to be noted that, when the first device is a terminal device, the terminal device may further transmit an uplink reference signal (for example, a sounding reference signal (SRS)) to one or more network devices, and the network device performs measurement based on the uplink reference signal, and transmit an obtained uplink measurement parameter (including but not limited to the CIR, the PDP, the RSRP, the UL RSTD, the TOA, the UL TDOA, the UL AoD, the UL RTOA, etc.) to the terminal device. In this way, the terminal device may obtain both the uplink measurement parameter and the downlink measurement parameter, and the uplink measurement parameter and the downlink measurement parameter may constitute a complete input data set of the first model.

In another example, when the first device for monitoring the first model is a network device, the network device may measure an uplink reference signal (for example, SRS) transmitted by the terminal device to obtain the measurement parameter of the network device with respect to the terminal device, and the measurement parameter includes but is not limited to: the CIR, the PDP, the RSRP, the UL RSTD, the TOA, the UL TDOA, the UL AoD, and the UL RTOA of the network device with respect to the terminal device.

It is to be noted that when the first device is a network device, the network device may transmit a downlink reference signal (for example, a PRS, SSB, CSI-RS, etc.) to the terminal device, and the terminal device performs measurement based on the downlink reference signal, and reports the obtained downlink measurement parameter (including but not limited to the CIR, the RSRP, the DL RSTD, the TOA, the DL TDOA, and the DL RSTD) to the network device. In this way, the network device may obtain both the uplink measurement parameter and the downlink measurement parameter, and the uplink measurement parameter and the downlink measurement parameter may constitute a complete input data set of the first model.

It is further to be noted that, in the above two examples, the downlink reference signal to be measured by the terminal device may be specified in the protocol or configured by the network device, which is not limited in the embodiments of the present disclosure. In addition, the reference signal transmitted by the terminal device to one or more network devices may correspond to a protocol or may be configured by the network device, which is not limited in the embodiments of the present disclosure.

As set forth above, when the first device monitors the first model, the first device may not collect the location label of the first device, but only collect the measurement parameter associated with the location of the first device, and use the measurement parameter as the input data set of the first model. Then the similarity between the input data set and the training data set of the first model is compared, and the performance of the first model is determined by using the similarity comparison result. In this way, the model monitoring is implemented in a scenario in which the label information of the input data cannot be collected, thereby the feasibility and flexibility of model monitoring.

In an embodiment of the present disclosure, the similarity comparison result between the input data set of the first model and the training data set of the first model may be used to determine the performance of the first model. The first device may determine the performance of the first model according to the above-mentioned similarity comparison result in the following two manners.

In the first manner, in an embodiment of the present disclosure, the first device may determine that the performance of the first model meets a condition in case where the similarity comparison result indicates that the input data set is similar to the training data set. In a case where the similarity comparison result indicates that the input data set is not similar to the training data set, the first device updates the first model.

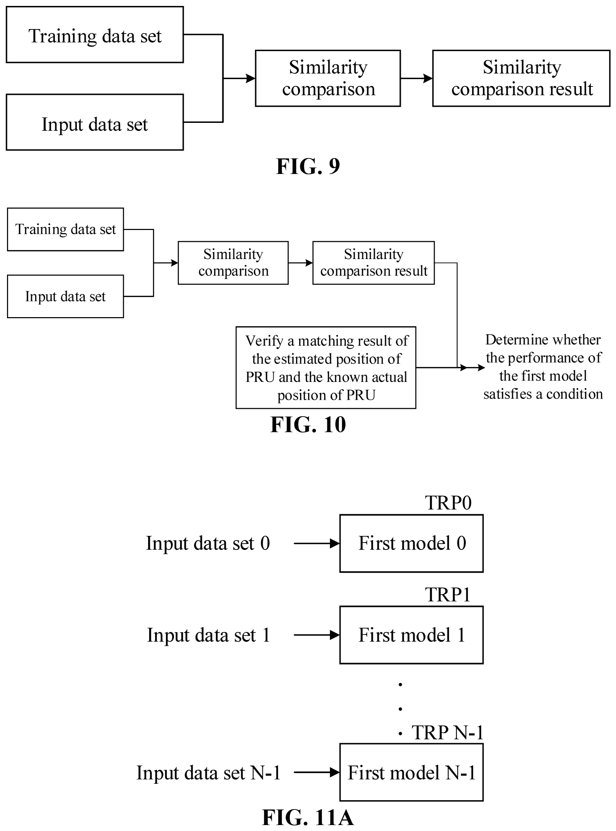

Referring to FIG. 9, when monitoring the first model, the first device may acquire the training data set and the input data set of the first model in advance. Then the similarity between the training data set and the input data set of the first model is compared to obtain the similarity comparison result.

In some embodiments, the similarity comparison result may indicate similarity or dissimilarity.

In a possible implementation, the similarity comparison result may be a hard classification result, for example, the similarity comparison result is 0 or 1. Herein 0 indicates that the training data set is not similar to the input data set of the first model, and 1 indicates that the training data set is similar to the input data set of the first model.

In another possible implementation, the similarity comparison result may be a soft classification result. In an example, the similarity comparison result may be a similarity between the training data set and the input data set with a decimal value between 0 and 1. In another example, the similarity comparison result is a quantized value between 0 and 1 which may be represented by n bits. For example, the quantized value is 0, 0.25, 0.75, and 1, and may be represented by 2 bits, where "00" represents that the similarity comparison result with the value of 0, "01" represents that the similarity comparison result with the value of 0.25, "10" represents that the similarity comparison result with the value of 0.75, and "11" represents that the similarity comparison result with the value of 1. It is to be understood that when the value of the similarity comparison result is greater than or equal to a specified threshold, the similarity comparison result may indicate that the training data set is similar to the input data set of the first model. When the value of the similarity comparison result is less than the specified threshold, the similarity comparison result may indicate that the training data set of the first model is not similar to the input data set.

It is to be understood that when the similarity comparison result indicates that the input data set is similar to the training data set, the output result obtained by processing the input data set by the first model is close to the output result of the real parameter. Therefore, in a case where the similarity comparison result indicates that the input data set is similar to the training data set, the first device may determine that the performance of the first model meets the requirement.

Conversely, in a case where the similarity comparison result indicates that the input data set is not similar to the training data set, an output result obtained after the input data is processed by the first model is not close to the real parameter. Therefore, when the similarity comparison result indicates that the input data set is not similar to the training data set, the first device may determine that the performance of the first model does not meet the requirement. In this case, the first device may update the first model so that the updated first model may output a more accurate result.

It is to be noted that updating the first model may include model fine-tuning or model switching. The model fine-tuning may include model parameter fine-tuning and/or structure fine-tuning.

It is to be understood that model switching refers to switching a first model to a new model that is retrained. The amount of data updated in model switching is large, while the amount of data updated in model fine-tuning is small. Therefore, the complexity of model switching is higher than that of model fine-tuning.

In a possible implementation, the manner of updating the first model may be specified by the protocol. The protocol specifies that the updating of the first model may be either a model fine-tuning or a model switching.

In another possible implementation, the manner of updating the first model may also be determined by the first device according to a preset rule. For example, when the similarity comparison result is a soft classification result, the first device may determine to perform model fine-tuning when the similarity comparison result is less than a threshold 1 and greater than or equal to a threshold 2. When the similarity comparison result is less than the threshold 2, the first device may determine to perform model switching. The first device may determine whether the input data set matches with the output data set according to the value of the soft classification result outputted by the first model, and determine whether to perform model fine-tuning or model switching according to the matching case, thereby improving the flexibility of model updating.

In the second manner, it is to be noted that, in addition to the measurement parameter associated with the location of the terminal device, the input data set may further include a measurement parameter associated with the location of a Positioning Reference Unit (PRU).

It is to be understood that a PRU is a terminal device, whose location is known, introduced into the network. The PRU may perform positioning measurement (e.g., the RSTD, RSRP, UE Rx-Tx time difference, etc.) and report the measurement result to the positioning server. In addition, the PRU may also transmit an uplink reference signal (e.g., SRS), and the TRP may measure and report the uplink measurement parameter (e.g., the RTOA, the UL-AoA, the gNB Rx-Tx time difference, etc.) according to the uplink reference signal.

In the first manner, the first device can monitor the performance of the first model without obtaining label information corresponding to each input data in the input data set. However, there may be an error in the similarity comparison result between the input data set and the training data set, resulting in a poor performance monitoring effect for the first model. In the second manner, the location of the PRU which is easily obtained can assist in monitoring the performance of the first model.

In an embodiment of the present disclosure, in case where a verification result indicates a success, and the similarity comparison result indicates that the input data set is similar to the training data set, the first device may determine that the performance of the first model satisfies a condition. In addition, in a case where the verification result indicates a failure, and/or the similarity comparison result indicates that the input data set is not similar to the training data set, the first device updates the first model. The verification result indicates a result of verifying whether an estimated position of the PRU is matched with an actual position; and the estimated position is obtained by processing, by the first model, the measurement parameter associated with the position of the PRU.

Referring to FIG. 10, when monitoring the first model, the first device may acquire the training data set and the input data set of the first model in advance. Furthermore, the similarity between the training data set and the input data set of the first model is compared to obtain the similarity comparison result.

Also, the first device may input the measurement parameter associated with the position of PRU (e.g., the CIR, the RSRP, the DL RSTD, the TOA, the DL TDOA, the DL RSTD, PDP, the UL RSTD, the UL TDOA, the UL AoD, the UL RTOA, the azimuth angle, the zenith angle between the PRU and the network device) into the first model, and the first model processes the measurement parameter to obtain the estimated position of the PRU. A matching result between the estimated position of the PRU and the known actual position of the PRU is verified. Next, the first device may determine whether the performance of the first model satisfies the condition in combination with the verification result and the similarity comparison result.

It is to be noted that in a scene in which the first model is used for direct positioning, the actual position may be coordinates of the actual position of the PRU, and the estimated position may be coordinates of the estimated position of the PRU. While in a scenario in which the first model is used for assisted positioning, the actual position may be an actual intermediate parameter related to the position of the PRU, and the estimated position may be an estimated intermediate parameter related to the position of the PRU.

In a possible implementation, if the estimated position of the PRU is the same as the actual position of the PRU, the verification result is considered to be a success, and the performance (or positioning accuracy) of the first model meets the requirement. Otherwise, if the estimated position of the PRU is different from the actual position of the PRU, the verification result is considered to be a failure, and the performance (or positioning accuracy) of the first model does not meet the requirement.

In another possible implementation, the first device may introduce a positioning error threshold in consideration of a positioning error between the actual position and the estimated position of the PRU in the practical application. If the difference between the estimated position of the PRU and the actual position of the PRU is less than the positioning error threshold, the verification result is considered to be a success. Otherwise, if the difference between the estimated position of the PRU and the actual position of the PRU is greater than or equal to the positioning error threshold, the verification result is considered to be a failure.

It is to be noted that the positioning error threshold may be specified by a protocol, may be configured by a network (for example, network high-layer signaling), or may be predefined, which is not limited in the embodiments of the present disclosure.

In some embodiments, there may be a plurality of PRUs. When the estimated positions of the plurality of PRUs are successfully matched with the actual positions of the plurality of PRUs, the verification result indicates a success. Alternatively, in a case where the number of positioning reference units whose estimated positions and actual positions are successfully matched with each other among the plurality of PRUs is larger than the first number, the verification result indicates a success.

That is, when there are a plurality of PRUs, the verification for the estimated positions and the actual positions of the PRUs may be successful in one of the following cases: the verification for all of the plurality of PRUs is successful, or the verification for a specified number (or a specified proportion) of PRUs in the plurality of PRUs is successful.

In an embodiment of the present disclosure, only in a case where a verification result indicates a success, and the similarity comparison result indicates the training data set is similar to the input data set, the first device determines that the performance of the first model satisfies a condition. When at least one of the cases that the verification result indicates a failure and that the similarity comparison result indicates the training data set is not similar to the input data set is satisfied, the first device may determine that the performance of the first model does not satisfy the condition, and the first device may update the first model.

It is to be noted that, similar to the above-described first manner, updating the first model by the first device may include model fine-tuning or model switching. The model fine-tuning may include model parameter fine-tuning and/or structure fine-tuning.

It is to be understood that model switching refers to switching from a first model to a new model that is retrained. The amount of data updated in the model switching is large, while the amount of data updated in model fine-tuning is small. Relatively speaking, the complexity of model switching is higher than that of model fine-tuning.

The method for updating the first model may be specified in the protocol or may be determined according to a preset rule. For example, similar to the first manner, when the similarity comparison result is a soft classification result, the first device may determine to perform model fine-tuning when the similarity comparison result is less than the threshold 1 and greater than or equal to the threshold 2. When the similarity comparison result is less than the threshold 2, the first device may determine to perform model switching. The first device may determine a situation of matching between the input data set and the output data set according to the value of the soft classification result outputted by the first model, and determine whether to perform model fine-tuning or model switching according to the matching case, thereby improving the flexibility of model updating.

As set forth above, when the estimated position of the PRU obtained after processing of the first model is successfully matched with the actual position of the PRU, and the similarity comparison result between the input data set and the training data set of the first model indicates that the input data set is similar to the training data set, the performance of the first model is determined to be good. When the estimated position of the PRU obtained after processing of the first model does not match with the actual position of the PRU, and the similarity comparison result between the input data set and the training data set of the first model indicates that the input data set is not similar to the training data set, the performance of the first model is determined to be poor. In addition, in case that the estimated position of the PRU obtained after processing of the first model does not match with the actual position of the PRU, the performance of the first model is determined to be poor even if the similarity comparison result between the input data set and the training data set of the first model indicates that the input data set is similar to the training data set. The first device may monitor the first model with the assistance of the PRU, thereby improving the accuracy of the performance detection of the first model.

In an embodiment of the present disclosure, the first model may be used for assisted positioning/assisted channel estimation for the terminal device. When the first model for assisted positioning/assisted channel estimation is located at the network device side (that is, the first device is a network device), the first model may be respectively deployed on different transmission and reception points (TRPs), and the first model may have different structures.

In some embodiments, the first model includes one or more sub-models, and one or more sub-models are deployed in a plurality of TRPs. The model monitoring method according to the embodiments of the present disclosure may further include the following operation.

The first device may determine a similarity comparison result between the input data set and the training data set of each sub-model.

If the similarity comparison results between the input data sets and the training data sets of the sub-models deployed on a part of the plurality of TRPs indicate that the input data sets of the sub-models are not similar to the respective training data sets, the sub-models deployed on the part of the plurality of TRPs are updated.

It is to be understood that the first device may monitor the performance of each of the plurality of sub-models, and update only the sub-models for which the similarity comparison result indicates the input data sets of the sub-models are not similar to the respective training data sets.

In an example, the first model may include N sub-models, and the N sub-models are deployed on N TRPs, respectively. N is an integer greater than 1.

In a possible implementation, the first model may include N different sub-models. Referring to FIG. 11A, the N sub-models are sub-model 0, sub-model 1 to sub-model N-1. The N sub-models are deployed in different TRPs, respectively. For example, sub-model 0 is deployed in TRP0, sub-model 1 is deployed in TRP1, and so on.

In this implementation, the N different sub-models have different input data sets and different training data sets. The input data set of each sub-model may be a measurement parameter of the TRP in which the respective sub-model is deployed. Alternatively, the input data set of each sub-model is a measurement parameter between the deployed TRP and the terminal device, and the measurement parameter includes but is not limited to: the CIR, the RSRP, the DL RSTD, the TOA, the DL TDOA, the DL RSTD, the PDP, the UL RSTD, the UL TDOA, the UL AoD, the UL RTOA, the azimuth, and the zenith between the terminal device and the TRP. Referring to FIG. 11A, the input data set of the sub-model 0 may be the input data set 0, which includes the measurement parameter between the terminal device and the TRP 0. The input data set of the sub-model 1 may be the input data set 1, which includes the measurement parameter between the terminal device and the TRP 1. By analogy, the input data set of the sub-model N-1 may be the input data set N-1, which includes the measurement parameter between the terminal device and the TRP N-1.

It is to be understood that in this implementation, for each sub-model, the first device determines an input data set and a training data set of the sub-model when monitoring the performance of the sub-model, determines the similarity comparison result between the input data set and the training data set of the sub-model, and determines whether the sub-model needs to be updated according to the similarity comparison result.

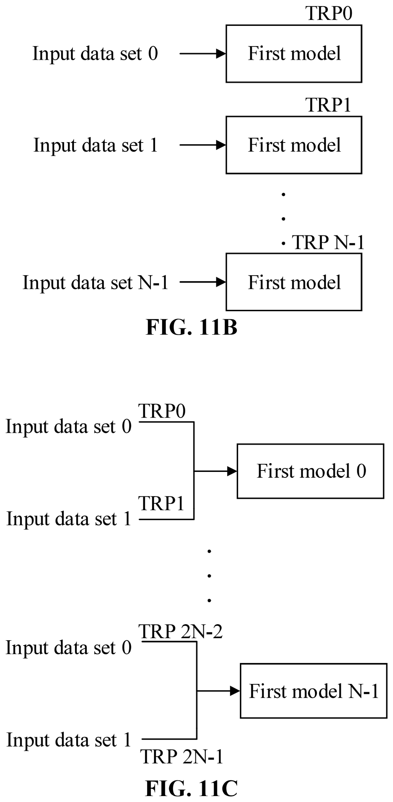

In another possible implementation, the first model may include N identical sub-models. Referring to FIG. 11B, N sub-models are deployed in N TRPs, respectively.

In this implementation, the N identical sub-models have identical training data sets, but have different input data sets. The input data set of each sub-model may be a measurement parameter of the TRP in which the respective sub-model is deployed. Alternatively, the input data set of each sub-model is a measurement parameter between the TRP where the respective sub-model is deployed and the terminal device, and the measurement parameter includes but is not limited to: the CIR, the RSRP, the DL RSTD, the TOA, the DL TDOA, the DL RSTD, the PDP, the UL RSTD, the UL TDOA, the UL AoD, the UL RTOA, the azimuth, and the zenith between the terminal device and the TRP. Referring to FIG. 11B, the input data set of the sub-model deployed in TRP 0 may be the input data set 0, which includes the measurement parameter between the terminal device and the TRP 0. The input data set of the sub-model deployed in TRP 1 may be the input data set 1, which includes the measurement parameter between the terminal device and the TRP 1. By analogy, the input data set of the sub-model deployed in TRP N-1 may be the input data set N-1, which includes the measurement parameter between the terminal device and the TRP N-1.

It is to be understood that in this implementation, the first device may determine, for each sub-model, an input data set of the sub-model when monitoring the performance of the sub-model, and comprises the similarity between the input data set and the training data set of the sub-model to obtain the similarity comparison result of the sub-model. Then the first device may determine which sub-models in the N sub-models need to be updated according to the similarity comparison result for each sub-model.

In another example, the first model may include N sub-models, and N is an integer greater than 1. The N sub-models are deployed in M TRPs, and M is an integer greater than N. It is to be understood that at least some of the M TRPs share a same sub-model. For example, referring to FIG. 11C, the first model may include N sub-models (sub-model 0 to sub-model N-1), the N sub-models are deployed on 2N TRPs, and every 2 TRPs are deployed with a same sub-model. The sub-model 0 may be deployed in TRP 0 and TRP 1, the sub-model 2 may be deployed in TRP 2 and TRP 3. By analogy, the sub-model N-1 may be deployed in TRP 2N-1 and TRP 2N.

It is to be understood that the first device may determine the input data set and the training data set of each sub-model. The different sub-models have different training data sets. Since one sub-model may be deployed in one or more TRPs, the input data set of the sub-model may include the measurement parameter of the one or more TRPs in which the sub-model is deployed. For example, referring to FIG. 11C, every 2 TRPs may share one sub-model. The input data set of the sub-model 0 may include the input data set 1 and/or the input data set 2. The input data set 1 may include the measurement parameter between the terminal device and TRP 1, and the input data set 2 may include the measurement parameter between the terminal device and TRP 2.

Further, the first device may determine, for each sub-model, the input data set of the sub-model when monitoring the performance of the sub-model, compare the similarity between the input data set and the training data set of the sub-model to obtain the similarity comparison result of the sub-model, and determine whether the sub-model needs to be updated according to the similarity comparison result of the sub-model.

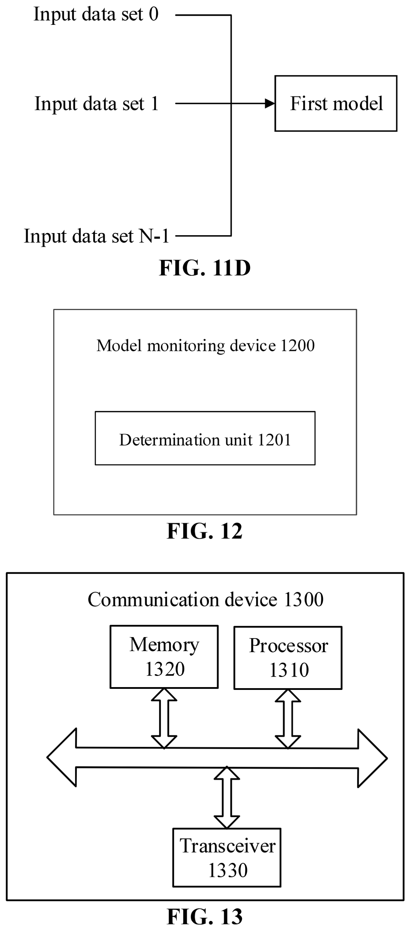

In yet another example, with reference to FIG. 11D, the first model may include only one sub-model, and a plurality of TRPs share the sub-model.

The input data set of the sub-model includes the measurement parameter of each TRP in the plurality of TRPs, and the first device may combine the measurement parameters of all TRPs as the input data set of the model. When monitoring the performance of the sub-model, the first device may determine to combine the measured parameters of all TRPs to obtain the input data set of the sub-model, compares the similarity between the input data set and the training data set of the sub-model to obtain the similarity comparison result of the sub-model, and determines whether the sub-model needs to be updated according to the similarity comparison result of the sub-model.

As set forth above, in the model monitoring method provided by the embodiments of the present disclosure, in consideration of different structures of the first model, only some of the sub-models in the first model are updated, thereby improving the flexibility of model monitoring. Moreover, the first device monitors the sub-model only by determining the input data set and the training data set of the sub-model, without inputting the label information of the input data set. In this way, the model monitoring is implemented in a scenario in which the label information of the input data cannot be collected, thereby improving the feasibility and flexibility of model monitoring.

Comparison of the similarity between the input data set and the training data set is described in detail below.

In an embodiment of the present disclosure, the similarity comparison result between the input data set and the training data set of the first model/sub-model included in the first model may include one or more of: a first comparison result between a statistical parameter of the input data set and a statistical parameter of the training data set; and a second comparison result between input data in the input data set and training data in the training data set.

It is to be noted that the statistical parameter of the data set may include one or more of: variance, mean, standard deviation, and a data distribution of the data in the data set. The data distribution may be a data distribution satisfied by the data in the data set, such as a Poisson distribution, a normal distribution, a Gaussian distribution, etc., which is not limited in the embodiments of the present disclosure.

It is to be understood that the first device may macroscopically compare the statistical parameter of the input data set and the statistical parameter of the training data set to obtain the first comparison result. In addition, the first device may also microscopically compare the internal data in the two data sets to obtain the second comparison result.

In a possible implementation, in a case where the similarity comparison result between the input data set and the training data set only includes the first comparison result between the statistical parameter of the input data set and the statistical parameter of the training data set, and the first comparison result indicates that the statistical parameter of the input data set is similar to the statistical parameter of the training data set, the similarity comparison result between the input data set and the training data set indicates similarity. Otherwise, if the first comparison result indicates that the statistical parameter of the input data set is not similar to the statistical parameter of the training data set, the similarity result between the input data set and the training data set indicates dissimilarity.

In another possible implementation, in a case where the similarity comparison result between the input data set and the training data set only includes the second comparison result between the input data in the input data set and the training data in the training data set, and if the second comparison result indicates that the input data in the input data set is similar to the training data in the training data set, the similarity comparison result between the input data set and the training data set indicates similarity. Otherwise, if the second comparison result indicates that the input data in the input data set is not similar to the training data in the training data set, the similarity result between the input data set and the training data set indicates dissimilarity.

In another possible implementation, in case where the similarity comparison result between the input data set and the training data set includes the above-mentioned first comparison result and second comparison result, if both the first comparison result and the second comparison result respectively indicate that the statistical parameter of the input data set is similar to the statistical parameter of the training data set and that the input data in the input data set is similar to the training data in the training data set, the similarity comparison result between the input data set and the training data set indicates similarity. If the first comparison result and the second comparison result indicates that the statistical parameter of the input data set is similar to the statistical parameter of the training data set and/or that the input data in the input data set is similar to the training data in the training data set, the similarity result between the input data set and the training data set indicates dissimilarity.

In an embodiment of the present disclosure, the first comparison result between the statistical parameter of the input data set and the statistical parameter of the training data set may include: a first matching determination result between the statistical parameter of the input data set and the statistical parameter of the training data set, and/or a first matching degree between the statistical parameter of the input data set and the statistical parameter of the training data set.

It is to be understood that the first matching determination result may be a hard classification result, and may include two results, i.e., matching and mismatching. In case where each statistical parameter of the input data set is same as the respective statistical parameter of the training data set, the first matching determination result indicates matching. In case where any one statistical parameter of the input data set is different from the respective statistical parameter of the training data set, the first matching decision result indicates mismatching.

In an example, in case where the statistical parameters include variance, mean, and standard deviation, when the variance, mean, and standard deviation of the input data set are respectively the same as the variance, mean, and standard deviation of the training data set, the first matching decision result indicates matching. If any one of the variance, the mean, or the standard deviation of the input data set is different from the respective variance, mean, and standard deviation of the training data set, the first matching determination result indicates mismatching.

In an example, in a case where the statistical parameter includes a data distribution, and the data distribution of the input data set is the same as the data distribution of the training data set, the first matching determination result indicates matching. Otherwise, if the data distribution of the input data set is different from the data distribution of the training data set, the first matching determination result indicates mismatching.

Whether the data distribution of the input data set is same as the data distribution of the training data set may be determined in a plurality of ways.

In a possible implementation, the data in the training data set may satisfy a first distribution. In a case where the number of data satisfying the first distribution in the input data set is greater than or equal to a first threshold, the data distribution of the input data set may be determined to be the same as the data distribution of the training data set. In case where the number of data satisfying the first distribution in the input data set is less than the first threshold, it may be determined that the data distribution of the input data set is different from the data distribution of the training data set.

In another possible implementation, the data in the training data set satisfies a first distribution. In case where a ratio of the number of data satisfying the first distribution in the input data set to the total number of data in the input data set is greater than or equal to a second threshold, it may be determined that the data distribution of the input data set is same as the data distribution of the training data set. In case where the ratio of the number of data satisfying the first distribution in the input data set to the total number of data in the input data set is less than the second threshold, it may be determined that the data distribution of the input data set is different from the data distribution of the training data set.

It is to be noted that the first distribution may be any one of a Poisson distribution, a normal distribution, or a Gaussian distribution, which is not limited in the embodiments of the present disclosure.

It is further to be noted that the first threshold and the second threshold in the above embodiments may be specified by a protocol, may be configured by a network, may be determined according to a preset rule, or may be predefined, which is not limited in the embodiments of the present disclosure.

Further, the first matching degree may be a soft classification result, and the value of the first matching degree may be a decimal value greater than or equal to 0.

In some embodiments, the first matching degree includes one or more of: a difference between a variance of the input data set and a variance of the training data set; a difference between the mean of the input data set and the mean of the training data set; and a mean square error of the input data set and the training data set.

It is to be understood that the first comparison result between the statistical parameter of the input data set and the statistical parameter of the training data set may include: a first matching determination result between the statistical parameter of the input data set and the statistical parameter of the training data set, and/or a first matching degree between the statistical parameter of the input data set and the statistical parameter of the training data set.

In a possible implementation, in case where the first comparison result includes only the first matching determination result, the first comparison result indicates similarity if the first matching decision result indicates matching, and the first comparison result indicates dissimilarity if the first matching determination result indicates mismatching.

In another possible implementation, in case where the first comparison result only includes the first matching degree, the first comparison result indicates similarity if the value of the first matching degree is greater than or equal to a third threshold, and the first comparison result indicates dissimilarity if the value of the first matching degree is smaller than the third threshold.

In yet another possible implementation, in case where the first comparison result includes both the first matching determination result and the first matching degree, the first comparison result indicates similarity if the first matching determination result indicates matching and the first matching degree is greater than or equal to the third threshold, and the first comparison result indicates dissimilarity if the first matching determination result indicates mismatching, and/or the first matching degree is less than the third threshold.

It is to be noted that the third threshold may be specified by a protocol, may be configured by a network, may be determined according to a preset rule, or may be predefined, which is not limited in the embodiments of the present disclosure.

In an embodiment of the present disclosure, the second comparison result between the input data in the input data set and the training data in the training data set may include: a second matching determination result between the input data in the input data set and the training data in the training data set; and/or a second matching degree between the input data in the input data set and the training data in the training data set.

The second matching determination result may be a hard classification result, and includes two results, i.e., matching and mismatching. The second matching degree may be a soft classification result with a decimal value between 0 and 1.

It is to be noted that the second matching determination result can be determined in multiple manners, three of which is implemented as described below.

In an implementation, if the number of input data in the input data set that are identical to the training data in the training data set is greater than or equal to a fourth threshold, the second matching determination result indicates matching. If the number of input data in the input data set that are identical to the training data in the training data set is less than the fourth threshold, the second matching determination result indicates mismatching.

In another implementation, if the ratio of the number of input data in the input data set that are identical to the training data in the training data set to the total number of input data in the input data set is greater than or equal to a fifth threshold, the second matching determination result indicates matching. If the ratio of the number of the input data in the input data set that are identical to the training data in the training data set to the total number of input data in the input data set is less than the fifth threshold, the second matching decision result indicates mismatching.

It is to be understood that in the above two implementations, for each input data in the input data set, the first device may compare the input data with each of training data in the training data set, and determine whether the data in the two data sets match with each other according to the number/proportion of the identical data in the two data sets.

In yet another implementation, for each input data in the input data set, the first device may compare the input data with a plurality of training data in the training data set to obtain a matching degree of the input data. If the number of input data having a matching degree greater than a sixth threshold in the input data set is greater than or equal to a seventh threshold, the second matching determination result indicates matching. If the number of input data having a matching degree greater than the sixth threshold in the input data set is smaller than the seventh threshold, the second matching determination result indicates mismatching.

It is to be understood that in this implementation, the first device may compare the input data in the input data set with the training data in the training data set one by one by calculating the Euclidean distance, cosine similarity, etc., to determine the matching degree of the respective input data. The matching degree may be a decimal value between 0 and 1.

If the number of input data in the input data set that have a large matching degree (that is, the matching degree is greater than the sixth threshold) with the training data of the training data set is large (greater than or equal to the seventh threshold), the second matching determination result between the input data set and the training data set indicates matching. Otherwise, if the number of input data in the input data set that have a large matching degree (that is, the matching degree is greater than the sixth threshold) with the training data of the training data set is small (less than the seventh threshold), the second matching determination result between the input data set and the training data set indicates mismatching.

In some embodiments, the second matching degree between the input data in the input data set and the training data in the training data set may include: a proportion of the number of input data with a matching degree greater than the fifth threshold in the input data set to the total number of input data in the input data set; or a proportion of input data in the input data set identical to training data in the training data set to the total number of input data in the input data set.

It is to be noted that at least one of the fourth threshold, the fifth threshold, the sixth threshold, or the seventh threshold in the above embodiments may be specified by a protocol, may be configured by a network, may be determined according to a preset rule, or may be predefined, which is not limited in the embodiments of the present disclosure.

It is to be understood that second comparison result between the input data in the input data set and the training data in the training data set includes: a second matching determination result between the input data in the input data set and the training data in the training data set; and/or a second matching degree between the input data in the input data set and the training data in the training data set.

In a possible implementation, in case where the second comparison result includes only the second matching determination result, the second comparison result indicates similarity if the second matching determination result indicates matching, and the second comparison result indicates dissimilarity if the second matching determination result indicates mismatching.

In another possible implementation, in case where the second comparison result only includes the second matching degree, the second comparison result indicates similarity if the value of the second matching degree is greater than or equal to the third threshold, and the second comparison results indicates dissimilarity if the value of the second matching degree is smaller than the third threshold.

In yet another possible implementation, in case where the second comparison result includes both the first matching determination result and the second matching degree, the second comparison result indicates similarity if the second matching determination result indicates matching and the second matching degree is greater than or equal to the third threshold, and the second comparison result indicates dissimilarity if the second matching determination result indicates mismatching, and/or the second matching degree is less than the third threshold.

As set forth above, in the model monitoring method provided by the embodiments of the present disclosure, the first device may flexibly determine the similarity comparison result between the input data set and the training data set of the first model according to a plurality of different ways, and determine the performance of the first model according to the similarity comparison result. In this way, the model monitoring is implemented in a scenario in which the label information of the input data cannot be collected, thereby improving the feasibility and flexibility of model monitoring.

[**0217]** It is to be noted that, updating the first model by the first device may include model fine-tuning or model switching. The model fine-tuning may include model parameter fine-tuning and/or structural fine-tuning.

[**0218]** It is to be understood that model switching refers to switching a first model to a model that is retrained. The amount of data updated in the model switching is large, while the amount of data updated in model fine-tuning is small.

[**0219]** In an embodiment of the present disclosure, in case where the similarity comparison result between the input data set and the training data set of the first model includes the soft classification result, the first device may determine a manner of updating the first model according to the value of the soft classification result.

[**0220]** In some embodiments, in case where the similarity comparison result includes a first matching degree between the statistical parameter of the input data set and the statistical parameter of the training data set, and/or a second matching degree between the data in the input data set and the data in the training data set, the first device may update the first model according to the following method.

[**0221]** In case where the first matching degree and/or the second matching degree is less than the third threshold and greater than or equal to the eighth threshold, the first device tunes a model parameter of the first model. In case where the first matching degree and/or the second matching degree is less than the eighth threshold, the first device switches the first model.

[**0222]** It is to be understood that the eighth threshold is less than the third threshold. When the first matching degree and/or the second matching degree is less than the third threshold and greater than or equal to the eighth threshold, the input data set of the first model is not similar to the training data set of the first model. In this case, the performance of the first model is poor, and the first device may tune or fine-tune the model parameter and/or the model structure of the first model, so that the performance of the first model may be quickly recovered.

[**0223]** When the first matching degree and/or the second matching degree is less than the eighth threshold, the performance of the first model is very poor, and the first device needs to switch the first model to ensure the performance of the model.

[**0224]** In this way, the first device may determine matching situation between the input data set and the output data set according to the value of the soft classification result outputted by the first model, and determine whether to perform model fine-tuning or model switching according to the matching situation, thereby improving the flexibility of model updating.

[**0225]** In an embodiment of the present disclosure, the first device may be a first terminal device. That is, the first device may be the terminal device to be processed (for example, a terminal device to be positioned, a terminal device for which the channel estimation information is to be determined), or a terminal device having a processing requirement (for example, a terminal device having a positioning requirement, or a terminal device having a channel estimation requirement), or a terminal device deployed with a first model. The first terminal device may monitor the performance of the first model under the configuration of the network device.

[**0226]** In some embodiments, in case where the first device is a first terminal device, before operation 810, the model monitoring method provided by the embodiments of the present disclosure may further include the following operations.

[**0227]** The first terminal device receives first information transmitted by a network device. The first information is used for configuring information for monitoring the first model, and the input data set is measured based on the information.

[**0228]** It is to be understood that before the first terminal device monitors the performance of the first model, the network device may further configure information for monitoring the first model for the first terminal device, and the first terminal device measures according to the configured information (for example, the first terminal device performs downlink measurement or transmits the uplink reference signal) to obtain the input data set of the first model.

[**0229]** In some embodiments, the network device may configure the information for monitoring the first model for the first terminal device through higher layer signaling (for example, RRC signaling) or physical layer signaling (for example, downlink control information (DCI)), which is not limited in the embodiments of the present disclosure.

[**0230]** In some embodiments, the first information may include one or more of: a reference signal type, a measurement type, and trigger information. The trigger information is used for triggering monitoring performance of the first model.

[0231] Optionally, the reference signal type may include one or more of a Positioning Reference Signal (PRS), a Synchronization Signal and PBCH Block (SSB), and a Sounding Reference Signal (SRS).

[0232] Optionally, the measurement type may include any one of periodic measurement, aperiodic measurement, semi-persistent measurement, or time-window measurement.

[**0233]** For the periodic measurement, the network device may configure a time period for measuring the reference signal in the process of monitoring the first model, and the number of measuring the reference signal in each time period, etc., which are not limited in the embodiments of the present disclosure.

[**0234]** In the aperiodic measurement, the reference signal is measured only for a preset number of times. For the aperiodic measurement, the network device may configure the number of measuring the reference signal.

[**0235]** For the semi-persistent measurement, the network device may configure a time duration of continuous measurement, a period of measurement within the time duration, the number of measurements within each period or other information.

[**0236]** For the time window measurement, the network device may configure a starting position of the time window, the length of the time window, and the number of measurements within the time window or other information.

[**0237]** In some embodiments, the first device is a first terminal device, and the model monitoring method provided by the embodiments of the present disclosure may further include the following operations.

[**0238]** The first terminal device receives second information transmitted by a network device, and the second information is used for configuring the input data set and/or the training data set of the first model.

[**0239]** It is to be understood that in case where the first device is a first terminal device, the input data set (mainly including the downlink measurement parameter) of the first model may be measured by the first terminal device. The input data set (mainly including the uplink measurement parameter) may also be measured by the network device, and the network device configures the input data set for the first terminal device through the second information, which is not limited in the embodiments of the present disclosure.

[**0240]** Further, the training data set of the first model may be configured by the network device to the first terminal device through the second information.

[**0241]** In some embodiments, if the first device is the terminal device, and the model monitoring method provided by the embodiments of the present disclosure may further include the following operation.

[**0242]** The first terminal device transmits the similarity comparison result between the input data set and the training data set of the first model to the network device.

[**0243]** It is to be understood that after determining the similarity comparison result between the input data set and the training data set of the first model, the first terminal device may transmit the similarity comparison result to the network device, so that the network device determines whether to update the first model according to the similarity comparison result.

[**0244]** In some embodiments, if the first device is the first terminal device, and the model monitoring method provided by the embodiments of the present disclosure may further include the following operation.

[**0245]** The first terminal device receives third information transmitted by the network device, and the third information is used for indicating to update the first model.

[**0246]** The third information may indicate a manner of updating the first model. For example, the third information may instruct the first terminal device to fine-tune the first model, or the third information may instruct the first terminal device to switch the first model. If the third information instructs the first terminal device to fine-tune the first model, the third information may further include a model parameter and/or model structure to be fine-tuned. If the third information may instruct the first terminal device to switch the first model, the third information may further include content related to the first model after switching.

[0247] As set forth above, in the model monitoring method provided by the embodiment of the present disclosure, when monitoring the first model, the first device compares similarity between the input data set of the first model and the training data set of the first model and determines the performance of the first model by using the similarity comparison result, without collecting the label information corresponding to the input data. In this way, the model monitoring is implemented in a scenario in which the label information of the input data cannot be collected, thereby improving the feasibility and flexibility of model monitoring.

[**0248]** Hereinafter, the model monitoring method provided by the embodiments of the present disclosure will be described in combination with specific application scenarios.

[**0249]** In an example, the first model may be used for direct positioning/assisted positioning. The first model is deployed in the LMF. That is, the LMF may monitor the performance of the first model. The operation that LMF monitors the performance of the first model may include following operations S1 to S3.

[**0250]** At S1, the LMF determines an input data set of the first model.

[**0251]** The input data set of the first model may include a measurement parameter associated with the position of the UE. The measurement parameter may include one or more of: the CIR, the PDP, the ToA, the path phase, the UL TDOA, the UL AoD, the RSRP, the RSRQ, the UL RTOA, etc.

[**0252]** The measurement parameter associated with the position of the UE may be a measurement parameter between the UE and one or more TRPs. The measurement parameter associated with the position of the UE may be obtained by measuring through one or more TRPs the uplink reference signal (for example, SRS) transmitted by the UE. Then the one or more TRPs may transmit the measured measurement parameter associated with the position of the UE to the LMF.

[**0253]** It is further to be noted that the uplink reference signal transmitted by the UE may be configured by the LMF for the UE through the gNB. The gNB may be one of the above-mentioned one or more TRPs, or the above-mentioned one or more TRPs may be included in the coverage of the gNB. When the one or more TRPs are included in the coverage of the gNB, the gNB may configure the information related to the uplink reference signal to the UE through any one of the TRPs.

[**0254]** At S2, the LMF compares the similarity between the input data set of the first model and the training data set of the first model to obtain a similarity comparison result.

[**0255]** The similarity comparison result may include a comparison result between the statistical parameters of the input data set of the first model and the statistical parameters of the training data set of the first model; and/or a comparison result, for each input data in the input data set of the first model, between the input data and the training data in the training data set of the first model.

[**0256]** It is to be noted that the process of comparing the similarity may be understood by referring to the description in the above-mentioned embodiments, and will not be elaborated herein for the sake of brevity.

[**0257]** Additionally, the training data set of the first model may be acquired by the LMF from a device for training the first model. If the device for training the first model is a third-party server, the LMF may request the training data set of the first model from the third-party server. If the device for training the first model is the LMF, the LMF may directly acquire the training data set of the first model.

[**0258]** At S3, the LMF determines whether to update the first model and a manner of updating the first model according to the similarity comparison result.

[**0259]** In a possible implementation, in case where the similarity comparison result indicates that the input data set and the training data set of the first model are similar, the LMF may determine that the performance of the first model satisfies a condition and does not update the first model. In case where the similarity comparison result indicates that the input data set and the training data set of the first model are not similar, the LMF may determine that the performance of the first model cannot satisfy the condition, and determine to update the first model.

[**0260]** In another possible implementation, the input data set of the first model may include measurement parameters associated with the positions of k PRUs, and actual position coordinates corresponding to the measurement parameters of the k PRUs (direct positioning) or actual intermediate parameters related to the positions (assisted positioning). The LMF may verify the actual position coordinates and estimated position coordinates of the k PRUs outputted by the first model, or the actual intermediate parameters of the k PRUs and estimated intermediate parameters of the k PRUs outputted by the first model. If the difference between the actual position coordinates or the actual intermediate parameters of the PRUs and the estimated position coordinates or the estimated intermediate parameters of the PRUs outputted by the first model is less than a threshold 3, the verification is successful, otherwise, the verification fails.

[**0261]** It is to be noted that it may be determined that the verification is successful when the verification for all k PRUs is successful, or the verification for a predetermined proportion of the k PRUs is successful.

[**0262]** Further, in case where the similarity comparison result between the input data set and the training data set of the first model indicates similarity, and the verification is successful, the LMF may determine that the performance of the first model satisfies a condition and does not update the first model. In the case where the similarity comparison result indicates that the input data set and the training data set of the first model are not similar, and/or the verification fails, the LMF may determine that the performance of the first model cannot satisfy the condition, and determine to update the first model.

[**0263]** It is to be noted that updating the first model may include model fine-tuning and model switching.

[0264] Optionally, the manner of updating the first model may be defined by the protocol. The protocol defines that the updating the first model may be either model fine-tuning or model switching.

[**0265]** Optionally, the manner of updating the first model may also be determined by the first device according to a preset rule. For example, when the similarity comparison result is a soft classification result, the LMF may determine to perform model fine-tuning when the similarity comparison result is less than threshold 1 and greater than or equal to threshold 2, and determine to perform model switching when the similarity comparison result is less than the threshold 2.

[**0266]** In another example, the first model may be used for direct positioning/assisted positioning. The first model may be deployed in the gNB. That is, the gNB may monitor the performance of the first model.

[**0267]** In a possible implementation, in a scenario in which the first model is used for direct positioning, the operation that the gNB monitors the performance of the first model may include the following operations.

[**0268]** At S1, the gNB determines an input data set of the first model.

[**0269]** The input data set of the first model may include a measurement parameter associated with the position of the UE. The measurement parameter may include one or more of: the CIR, the PDP, the ToA, the path phase, the UL TDOA, the UL AoD, the RSRP, the RSRQ, the UL RTOA, etc.

[**0270]** The measurement parameter associated with the position of the UE may be a measurement parameter between the UE and one or more TRPs. The measurement parameter associated with the position of the UE may be obtained by measuring through one or more TRPs the uplink reference signal (for example, SRS) transmitted by the UE. Then the one or more TRPs may transmit the measured measurement parameter associated with the position of the UE to the LMF.

[0271] The gNB may be a TRP, or the above-mentioned one or more TRPs may be included in the coverage of the gNB. In a scenario in which the one or more TRPs are included within the coverage of the gNB, the gNB may acquire the measurement parameter related to the position of UE obtained by measuring by the one or more TRPs, to obtain the input data set of the first model.

[**0272]** At S2, the gNB compares the similarity between the input data set of the first model and the training data set of the first model to obtain a similarity comparison result.

[**0273]** The similarity comparison result may include a comparison result between the statistical parameters of the input data set of the first model and the statistical parameters of the training data set of the first model; and/or a comparison result, for each input data in the input data set of the first model, between the input data and the training data in the training data set of the first model.

[**0274]** It is to be noted that the process of comparing the similarity may be understood by referring to the description in the above-mentioned embodiments, and will not be elaborated herein for the sake of brevity.

[**0275]** Additionally, the training data set of the first model may be acquired by the gNB from a device for training the first model. If the device for training the first model is a third-party server/LMF, the gNB may request the training data set of the first model from the third-party server/LMF. If the device for training the first model is the gNB, the gNB may directly acquire the training data set of the first model.

[**0276]** At S3, the gNB determines whether to update the first model and a manner of updating the first model according to the similarity comparison result.

[**0277]** It is to be noted that the gNB determines whether to update the first model and the manner of updating the first model based on the similarity comparison result by referring to the above-mentioned relevant description where the LMF determines whether to update the first model and the manner of updating the first model based on the similarity comparison result, which will not be elaborated herein for the sake of brevity.

[**0278]** In a possible implementation, the first model may include one or more sub-models in a scenario in which the first model is used for assisted positioning. One or more sub-models are deployed in one or more TRPs within the coverage of gNB. In this scenario, the gNB may obtain input results of different sub-models to position the UE in conjunction with the input results. In this scenario, the operation that gNB monitors the performance of the first model may include following operations.

[**0279]** At S1, the gNB determines an input data set of each sub-model of the first model.

[**0280]** Referring to FIG. 11A, the first model may include N different sub-models, and the N sub-models are sub-model 0, sub-model 1 to sub-model N-1. The sub-model 0 is deployed in TRP 0, the sub-model 1 is deployed in TRP 1, and so on. The input data set of each sub-model may be a measurement parameter of the TRP in which the respective sub-model is deployed. In other words, the input data set of each sub-model is a measurement parameter between the TRP in which the respective sub-model is deployed and the terminal device, which includes but is not limited to: the CIR, the RSRP, the DL RSTD, the TOA, the DL TDOA, the DL RSTD, the PDP, the UL RSTD, the UL TDOA, the UL AoD, the UL RTOA, the azimuth, and the zenith between the terminal device and the TRP. That is, the input data set of the sub-model 0 may be the input data set 0, which includes the measurement parameter between the terminal device and the TRP 0. The input data set of the sub-model 1 may be the input data set 1, which includes the measurement parameter between the terminal device and the TRP 1. By analogy, the input data set of the sub-model N-1 may be the input data set N-1, which includes the measurement parameter between the terminal device and the TRP N-1.

[0281] Referring to FIG. 11B, the first model may include N identical sub-models, and the N sub-models are deployed in N TRPs, respectively. The input data set of each sub-model may be a measurement parameter of the TRP in which the respective sub-model is deployed. In other words, the input data set of each sub-model is a measurement parameter between the TRP in which the respective sub-model is deployed and the terminal device, which includes but not limited to: the CIR, the RSRP, the DL RSTD, the TOA, the DL TDOA, the DL RSTD, the PDP, the UL RSTD, the UL TDOA, the UL AoD, the UL RTOA, the azimuth, and the zenith between the terminal device and the TRP.

[**0282]** Referring to FIG. 11C, the first model may include N sub-models (sub-model 0 to sub-model N-1), the N sub-models are deployed on 2N TRPs, and every 2 TRPs may be deployed with a same sub-model. The sub-model 0 may be deployed in TRP 0 and TRP 1, the sub-model 2 may be deployed in TRP 2 and TRP 3. By analogy, the sub-model N-1 may be deployed in TRP 2N-1 and TRP 2N. The input data set of each sub-model may include one or more measurement parameters of one or more TRPs in which the sub-model is deployed. Specifically, referring to FIG. 11C, every 2 TRPs may share one sub-model. The input data set of the sub-model 0 may include the input data set 1 and/or the input data set 2. The input data set 1 may include the measurement parameter between the terminal device and the TRP 1, and the input data set 2 may include the measurement parameter between the terminal device and the TRP 2.

[0283] Referring to FIG. 11D, the first model may include only one sub-model, and a plurality of TRPs share the sub-model. The input data set includes a measurement parameter of each of the plurality of TRPs, and the first device may combine the measurement parameters of all of the TRPs as the input data set of the model.

[**0284]** At S2, the gNB compares, for each sub-model, the similarity between the input data set of the respective sub-model and the training data set of the respective sub-model to obtain a similarity comparison result of the respective sub-model.

[**0285]** It is to be noted that the training data sets of identical sub-models may be identical, while the training data sets of different sub-models are different. The gNB may acquire the training data set of each sub-model. The training data set may be acquired by the gNB from the device for training the sub-models. If the device for training the sub-models is a third-party server/LMF, the gNB may request the training data sets of the sub-models from the third-party server/LMF. If the device for training the sub-models is the gNB, the gNB may directly acquire the training data sets of the sub-models.

[**0286]** The similarity comparison result may include a comparison result between the statistical parameter of the input data set of the sub-model and the statistical parameter of the training data set of the sub-model; and/or a comparison result, for each input data in the input data set of the sub-model, of the input data and the training data in training data set of the sub-model.

[**0287]** It is to be understood that the process of comparing the similarity may be understood by referring to the description in the above-mentioned embodiments, and will not be elaborated herein for the sake of brevity.

[0288] At S3, the gNB determines, for each sub-model of the first model, whether to update the sub-model and a manner of updating the sub-model according to the similarity comparison result of the sub-model.

[**0289]** It is to be understood that if the similarity comparison results between the input data sets and the training data sets of the sub-models deployed on a part of the plurality of TRPs indicate that the input data sets of the sub-models are not similar to the training data sets, the gNB updates the sub-models deployed on the part of the plurality of TRPs. That is, in the scenario in which the first model is used for assisted positioning, the gNB may separately monitor the performance of each of the plurality of sub-models, and update only the sub-models for which the similarity comparison result between the input data set and the output data set indicates dissimilarity

[**0290]** In another example, the first model is used for direct positioning/assisted positioning. The first model is deployed in the UE. That is, the UE may monitor the performance of the first model. The operation that the UE monitors the performance of the first model may include following operations.

[**0291]** At S1, the UE receives first information transmitted by a network device, and the first information is used for configuring information for monitoring the first model.

[0292] The network device may be the gNB or LMF.

[**0293]** It is to be noted that the first information may also be referred to as monitoring instruction information, and the first information may include one or more of: a reference signal type, a measurement type, and trigger information. The trigger information is used for triggering performance monitoring for the first model.

[**0294]** Optionally, the reference signal type may include one or more of: a PRS, an SSB and an SRS.

[**0295]** Optionally, the measurement type may include any one of: periodic measurement, aperiodic measurement, semi-persistent measurement, or time-window measurement.

[**0296]** At S2, the UE receives second information transmitted by the network device, and the second information is used for configuring an input data set and/or a training data set of the first model.

[**0297]** It is to be noted that S2 is an optional operation.

[**0298]** When the input data set (mainly including downlink measurement parameter) of the first model is measured by the UE, S2 may not be performed. When the input data set (mainly including uplink measurement parameter) of the first model is measured by the network device, the network device may configure the input data set for the UE through the second information in S2.

[**0299]** In addition, when the UE is a device for training the first model, the UE may directly acquire the training data set of the first model without performing S2. When the device for training the first model is a device other than the UE (for example, a third-party server/LMF/gNB, etc.), the network device may configure the training data set for the UE through the second information in S2.

[**0300]** At S3, the UE compares the similarity between the input data set of the first model and the training data set of the first model to obtain a similarity comparison result.

[**0301]** The similarity comparison result may include a comparison result between the statistical parameters of the input data set of the first model and the statistical parameters of the training data set of the first model; and/or a comparison result, for each input data in the input data set of the first model, between the input data and the training data in the training data set of the first model.

[**0302]** It is to be noted that the process of comparing the similarity may be understood by referring to the description in the above-mentioned embodiments, and will not be elaborated herein for the sake of brevity.

[**0303]** At S4, the UE transmits the similarity comparison result between the input data set and the training data set of the first model to a network device.

[**0304]** It is to be understood that after determining the similarity comparison result between the input data set and the training data set of the first model, the UE may transmit the similarity comparison result to the network device, so that the network device determines whether to update the first model according to the similarity comparison result.

[**0305]** At S5, the UE receives third information transmitted by the network device, and the third information is used for indicating to update the first model.

[**0306]** The third information may indicate a manner of updating the first model. For example, the third information may instruct the UE to fine-tune the first model, or the third information may instruct the UE to switch the first model. If the third information instructs the UE to fine-tune the first model, the third information may further include a model parameter and/or a model structure to be fine-tuned. If the third information may instruct the UE to switch the first model, the third information may further include content related to the first model after switching.

[**0307]** As set forth above, in the model monitoring method provided by the embodiment of the present disclosure, when different devices monitor the first model, the device may compare the similarity between the input data set of the first model and the training data set of the first model without collecting label information corresponding to the input data, and determine the performance of the first model by using the similarity comparison result. In this way, the model monitoring is implemented in a scenario in which the label information of the input data cannot be collected, thereby improving the feasibility and flexibility of model monitoring.

[**0308]** The preferred embodiments of the present disclosure have been described in detail with reference to the accompanying drawings. However, the present disclosure is not limited to the specific details in the above embodiments, various simple modifications can be made to the technical solution of the present disclosure within the technical conception scope of the present disclosure, and these simple modifications all belong to the protection scope of the present disclosure. For example, the specific technical features described in the above specific embodiments may be combined in any suitable manner without contradiction, and various possible combinations are not further described in the present disclosure in order to avoid unnecessary repetition. For another example, the various embodiments of the present disclosure may be combined arbitrarily, and the combination is likewise to be regarded as the disclosure of the present disclosure so long as it does not depart from the concept of the present disclosure. For another example, on the premise that there is no conflict, the embodiments described in the present disclosure and/or the technical features in the embodiments may be arbitrarily combined with the prior art, and the technical solution obtained after the combination should also fall within the scope of protection of the present disclosure.

[**0309]** It is further to be understood that, in various method embodiments of the present disclosure, the sequence numbers of the above-described processes do not mean the sequence of execution, and the execution order of each process should be determined by its function and inherent logic, and should not limit the implementation of the embodiments of the present disclosure.

[**0310]** FIG. 12 is a schematic structural diagram of a composition of a model monitoring device 1200 according to an embodiment of the present disclosure, which is applied to the first device. As illustrated in FIG. 12, the model monitoring device 1200 includes a determination unit 1201.

[**0311]** The determination unit 1201 is configured to determine a similarity comparison result between an input data set and a training data set of a first model. The similarity comparison result is used for determining a performance of the first model.

[**0312]** Optionally, the first model is used for direct positioning/assisted positioning for a first terminal device, and the input data set includes a measurement parameter associated with a position of the first terminal device.

[0313] Optionally, the measurement parameter is a measurement parameter between the first terminal device and one or more network devices.

[**0314]** Optionally, the training data set includes a measurement parameter between a second terminal device and one or more network devices, and label information corresponding to each measurement parameter.

[**0315]** Optionally, the measurement parameter includes one or more of: a CIR, a PDP, a ToA, a path phase, a UL TDoA, a DL TdoA, a UL AoD, a DL AoD, a UL RTOA, a DL RSTD, an RSRP, an RSRQ, an azimuth, and a zenith.

[**0316]** Optionally, in case where the first model is used for direct positioning for the terminal device, label information corresponding to each training data includes a location between the second terminal device and a network device.

[**0317]** Optionally, in case where the first model is used for assisted positioning for the terminal device, label information corresponding to each training data includes one or more of: a ToA, a DL TDoA, a DL AoD, a DL RSTD, a UL TDoA, a UL AoD, a UL RTOA, an RSRP, an RSRQ, an LOS/NLOS identification and distance information between the second terminal device and the network device.

[**0318]** Optionally, the determination unit 1201 is further configured to: in case where the similarity comparison result indicates that the input data set is similar to the training data set, determine that the performance of the first model satisfies a condition; and in case where the similarity comparison result indicates that the input data set is not similar to the training data set, determine to update the first model.

[**0319]** Optionally, the input data set further includes a measurement parameter associated with a position of the positioning reference unit.

[**0320]** The determination unit 1201 is further configured to: in case where a verification result indicates a success, and the similarity comparison result indicates that the input data set is similar to the training data set, determine that the performance of the first model satisfies a condition; and in a case where the verification result indicates a failure and/or the similarity comparison result indicates that the input data set is not similar to the training data set, determine to update the first model.

[**0321]** The verification result indicates a result of verifying whether an estimated position of the positioning reference unit is successfully matched with an actual position of the positioning reference unit, and the estimated position is obtained by processing the measurement parameter associated with the position of the positioning reference unit by the first model.

[**0322]** Optionally, there are a plurality of positioning reference units.

[**0323]** In case where estimated positions of the plurality of positioning reference units are successfully matched with actual positions of the plurality of positioning reference units, the verification result indicates a success; or in case where the number of positioning reference units whose estimated positions are successfully matched with actual positions in the plurality of positioning reference units, is greater than a first number, the verification result indicates a success.

[**0324]** Optionally, the similarity comparison result includes one or more of: a first comparison result between a statistical parameter of the input data set and a statistical parameter of the training data set; and a second comparison result between input data in the input data set and training data in the training data set.

[**0325]** Optionally, the first comparison result includes: a first matching determination result between the statistical parameter of the input data set and the statistical parameter of the training data set; and/or a first matching degree between the statistical parameter of the input data set and the statistical parameter of the training data set.

[**0326]** Optionally, the statistical parameter includes one or more of: a variance, a mean, a standard deviation, and a data distribution.

[**0327]** Optionally, in case where the statistical parameters of the input data set are the same as the respective statistical parameters of the training data set, the first matching determination result indicates matching. In case where any one statistical parameter of the input data set is different from the respective statistical parameter of the training data set, the first matching determination result indicates mismatching.

[**0328]** Optionally, the data in the training dataset satisfies a first distribution. In case where the number of data satisfying the first distribution in the input data set is greater than or equal to a first threshold, a data distribution of the input data set is same as a data distribution of the training data set. In case where the number of data satisfying the first distribution in the input data set is less than the first threshold, the data distribution of the input data set is different from the data distribution of the training data set.

[**0329]** Optionally, the data in the training dataset satisfies a first distribution. In case where a ratio of the number of data satisfying the first distribution in the input data set to the total number of data in the input data set is greater than or equal to the second threshold, the data distribution of the input data set is same as the data distribution of the training data set. In case where the ratio of the number of data satisfying the first distribution in the input data set to the total number of data in the input data set is less than the second threshold, the data distribution of the input data set is different from the data distribution of the training data set.

[**0330]** Optionally, the first matching degree includes one or more of: a difference between a variance of the input data set and a variance of the training data set; a difference between a mean of the input data set and a mean of the training data set; and a mean square error of the input dataset and the training dataset.

[**0331]** Optionally, in case where the first matching determination result indicates matching, and the first matching degree is greater than or equal to a third threshold, the first comparison result indicates similarity. In case where the first matching determination result indicates mismatching, and/or the first matching degree is less than the third threshold, the first comparison result indicates dissimilarity.

[**0332]** Optionally, the second comparison result includes: a second matching determination result between the input data in the input data set and the training data in the training data set; and/or a second matching degree between the input data in the input data set and the training data in the training data set.

[**0333]** Optionally, if the number of input data in the input data set that are identical to the training data in the training data set is greater than or equal to a fourth threshold, the second matching determination result indicates matching. If the number of input data in the input data set that are identical to the training data in the training data set is less than the fourth threshold, the second matching determination result indicates mismatching.

[**0334]** Optionally, if the ratio of the number of input data in the input data set that are identical to the training data in the training data set to the total number of input data in the input data set is greater than or equal to a fifth threshold, the second matching determination result indicates matching. If the ratio of the number of the input data in the input data set that are identical to the training data in the training data set to the total number of input data in the input data set is less than the fifth threshold, the second matching decision result indicates mismatching.

[**0335]** Optionally, the determination unit 1201 is further configured to, for each input data in the input data set, compare the input data with a plurality of training data in the training data set to obtain a matching degree of the input data.

[**0336]** If the number of input data having a matching degree greater than a sixth threshold in the input data set is greater than or equal to a seventh threshold, the second matching determination result indicates matching. If the number of input data having a matching degree greater than the sixth threshold in the input data set is smaller than the seventh threshold, the second matching determination result indicates mismatching.

[**0337]** Optionally, the second matching degree includes: a proportion of the number of input data with a matching degree greater than the fifth threshold in the input data set to the total number of input data in the input data set; or a proportion of the number of input data in the input data set identical to training data in the training data set to the total number of input data in the input data set.

[**0338]** Optionally, in case where the second matching determination result indicates matching, and the second matching degree is greater than or equal to a third threshold, the second comparison result indicates similarity. In a case where the second matching determination result indicates mismatching and/or the second matching degree is less than the third threshold, the second comparison result indicates dissimilarity.

[**0339]** Optionally, in case where each of the first comparison result and the second comparison result indicates similarity, the input data set is similar to the training data set. In case where the first comparison result and/or the second comparison result indicates dissimilarity, the input data set is not similar to the training data set.

[**0340]** Optionally, the similarity comparison result includes a first matching degree between a statistical parameter of the input data set and a statistical parameter of the training data set, and/or a second matching degree between data in the input data set and data in the training data set; and

[0341] The determination unit 1201 is further configured to: in case where the first matching degree and/or the second matching degree is less than a third threshold and greater than or equal to an eighth threshold, enable the first device to fine-tune a model parameter of the first model; and in case where the first matching degree and/or the second matching degree is less than the eighth threshold, enable the first device to switch the first model.

[**0342]** Optionally, the first device is a network device, the first model includes one or more sub-models, the one or more sub-models are deployed at a plurality of TRPs.

[**0343]** The determination unit 1201 is further configured to: determine a similarity comparison result between the input data set and the training data set of each sub-model; and in case where similarity comparison results between the input data sets and the training data sets of the sub-models deployed on a part of the plurality of TRPs indicate that the input data sets of the sub-models are not similar to the training data sets of the sub-models, update the sub-models deployed on the part of the plurality of TRPs.

[**0344]** Optionally, the first model includes N sub-models, the N sub-models are deployed in N TRPs, and N is an integer greater than 1. The input data set of each sub-model includes a measurement parameter of the TRP in which the sub-model is deployed.

[**0345]** Optionally, the first model includes N sub-models, N is an integer greater than 1, the N sub-models are deployed in M TRPs, M is an integer greater than N. At least part of the M TRPs share a same sub-model. The input data set of each sub-model includes the measurement parameter of one or more TRPs in which the sub-model is deployed.

[**0346]** Optionally, the first model includes N different sub-models, and the training data sets of different sub-models are different.

[**0347]** Optionally, the first model includes N identical sub-models, and the training data sets of the sub-models are the same.

[**0348]** Optionally, the first model includes one sub-model, and the plurality of TRPs share the sub-model. The input data set of the sub-model includes measurement parameter of each of the plurality of TRPs.

[**0349]** Optionally, the first device is the first terminal device. The first device further includes a transceiver unit, and the transceiver unit is configured to receive first information transmitted by a network device. The first information is used for configuring information for monitoring the first model, and the input data set is measured based on the information.

[**0350]** Optionally, the first information includes one or more of: a reference signal type, a measurement type, and trigger information. The trigger information is used for triggering performance monitoring for the first model.

[0351] Optionally, the reference signal type includes: a positioning reference signal (PRS), a synchronization signal block (SSB), and a sounding reference signal (SRS).

[**0352]** Optionally, the measurement type includes: periodic measurement, aperiodic measurement, semi-persistent measurement, or time-window measurement.

[**0353]** Optionally, the first device is the first terminal device. The transceiver unit is further configured to receive second information transmitted by a network device. The second information is used for configuring the input data set and/or the training data set of the first model.

[**0354]** Optionally, the first device is the first terminal device. The transceiver unit is further configured to transmit the similarity comparison result between the input data set and the training data set of the first model to a network device.

[**0355]** Optionally, the first device is the first terminal device. The transceiver unit is further configured to receive third information transmitted by the network device. The third information is used for indicating updating the first model.

[**0356]** It is to be understood for those skilled in the art that the above-mentioned description of the model monitoring device according to the embodiments of the present disclosure may be understood with reference to the description of the model monitoring method according to the embodiments of the present disclosure.

[**0357]** FIG. 13 is a schematic structural diagram of a communication device 1300 according to an embodiment of the present disclosure. The communication device may be the first device. The communication device 1300 illustrated in FIG. 13 includes a processor 1310, and the processor 1310 can call and run a computer program from memory to implement the method in the embodiments of the present disclosure.

[0358] Optionally, as illustrated in FIG. 13, the communication device 1300 may further include a memory 1320. The processor 1310 can call and run the computer program from the memory 1320 to implement the method in the embodiments of the disclosure.

[**0359]** The memory 1320 may be a separate device independent of the processor 1310, or may be integrated in the processor 1310.

[0360] Optionally, the communication device 1300 may be the first device in the embodiments of the present disclosure, and the communication device 1300 may implement the corresponding operations implemented by the first device in the methods of the embodiments of the disclosure. For the sake of brevity, it will not be elaborated herein.

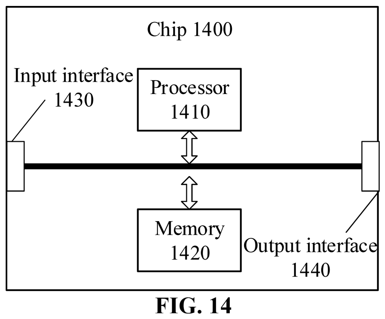

[0361] FIG. 14 is a schematic structural diagram of a chip according to an embodiment of the present disclosure. The chip 1400 illustrated in FIG. 14 includes a processor 1410, and the processor 1410 may call and run computer programs from a memory to implement the method in the embodiments of the present disclosure.

[0362] Optionally, as illustrated in FIG. 14, the chip 1400 may further include a memory 1420. The processor 1410 may call and run the computer program from the memory 1420 to implement the method in the embodiments of the disclosure.

[**0363]** The memory 1420 may be a separate device independent of the processor 1410, or may be integrated in the processor 1410.

[0364] Optionally, the chip 1400 may also include an input interface 1430. The processor 1410 may control the input interface 1430 to communicate with other devices or chips, and in particular may obtain information or data sent by other devices or chips.

[0365] Optionally, the chip 1400 may also include an output interface 1440. The processor 1410 may control the output interface 1440 to communicate with other devices or chips. In particular, the processor may control the output interface to output information or data to other devices or chips.

[**0366]** Optionally, the chip may be applied to the first device in the embodiments of the present disclosure, and the chip may implement the corresponding operations implemented by the first device in each method of the embodiments of the disclosure. For the sake of brevity, it will not be elaborated herein.

[**0367]** It is to be understood that the chip mentioned in the embodiments of the present disclosure can also be referred to as a system level chip, a system chip, a chip system or an on-chip system chip, etc.

[**0368]** It is to be understood that the processor of the embodiment of the present disclosure may be an integrated circuit chip having signal processing capability. During the implementation, the various operations of the above method embodiment may be implemented by the integrated logic circuit of hardware in the processor or instructions in the form of software. The above processor can be a general-purpose processor, a digital signal processor (DSPs), an application specific integrated circuit (ASICs), a field programmable gate array (FPGAs) or other programmable logic device, a discrete gate or a transistor logic device, and a discrete hardware component. The disclosed methods, steps and logic block diagrams in the embodiments of the present disclosure can be implemented or executed. The general-purpose processor may be a microprocessor or the processor may be any conventional processor or the like. The operations of the method disclosed in connection with the embodiment of the present disclosure can be directly embodied as the hardware decoding processor, or the combination of the hardware and software modules in the decoding processor, for implementation. The software module may be located in a random memory, a flash memory, a read-only memory, a programmable read-only memory or an electrically erasable programmable memory, a register and other mature storage media in the art. The storage medium is located in the memory, and the processor reads information in the memory and implement the operations of the above method in combination with its hardware.

[**0369]** It is to be understood that the memory in the embodiments of the present disclosure may be a volatile memory or non-volatile memory, or may include both volatile and non-volatile memory. The nonvolatile memory can be a read-only memory (ROM), a programmable ROM (PROM), an erasable Prom (EPROM), an electrically EPROM (EEPROM) or a flash memory. The volatile memory may be random access memory (RAM), which is used as an external cache. By way of exemplary illustration, but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and direct Rambus RAM (DR RAM). It is to be noted that the memory of the systems and methods described herein is intended to include, but is not limited to, these and any other suitable types of memory.

[**0370]** It is to be understood that the above-described memory is exemplary but not restrictive. For example, the memory in the embodiment of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but not limited to, these and any other suitable types of memory.

[**0371]** The embodiments of the present disclosure further provide a computer-readable storage medium for storing computer programs.

[**0372]** Optionally, the computer-readable storage medium may be applied to the first device in the embodiments of the present disclosure, and the computer program enables the computer to perform the corresponding operations implemented by the network device in the various methods of the embodiments of the present disclosure. For the sake of brevity, it will not be elaborated here.

[**0373]** The embodiment of the present disclosure further provides a computer program product, including a computer program instruction.

[**0374]** Optionally, the computer program product may be applied to the first device in the embodiments of the present disclosure, and the computer program instructions enable the computer to perform the corresponding operations implemented by the first device in the various methods of the embodiments of the present disclosure. For the sake of brevity, it will not be elaborated here.

[**0375]** The embodiment of the present disclosure further provides a computer program.

[**0376]** Optionally, the computer program may be applied to the first device in the embodiments of the present disclosure. The computer program, when runs on the computer, causes the computer to perform the corresponding operations implemented by the first device in various methods of the embodiments of the disclosure. For the sake of brevity, it will not be elaborated here.

[**0377]** Those of ordinary skill in the art may realize that the units and algorithm steps of the various examples described in combination with the disclosed embodiments herein can be implemented by an electronic hardware or a combination of computer software and electronic hardware. Whether these functions are performed in hardware or software depends on the specific application and design constraints of the technical solution. A professional technician may use different methods to implement the described functions for specific applications, but such implementation shall not be considered beyond the scope of the present disclosure.

[**0378]** Those skilled in the art can clearly understand that for the convenience and simplicity of the description, regarding the specific working process of the system, device and unit described above, reference may be made to the corresponding process in the method embodiment described above, and will not be elaborated here.

[**0379]** In several embodiments provided by the present disclosure, it is to be understood that the disclosed systems, devices and methods can be implemented in other ways. For example, the device embodiment described above is only schematic. For example, the division of the units is only a logical function division, and there can be another division method in actual implementation, for example, multiple units or components can be combined or integrated into another system, or some features can be ignored or not implemented. On the other hand, the mutual coupling or direct coupling or communication connection illustrated or discussed can be indirect coupling or communication connection through some interfaces, devices or units, and can be electric, mechanical or other forms.

[**0380]** The unit described as a separation part may or may not be physically separated, and the unit displayed as a unit may or may not be a physical unit, that is, it may be located in one place, or it may be distributed to multiple network units. Some or all of the units can be selected according to the actual needs to achieve the purpose of the embodiment.

[**0381]** In addition, the functional units in each embodiment of the present disclosure may be integrated in one processing unit, each functional unit may exist physically alone, or two or more functional units may be integrated in one unit.

[**0382]** If the function is implemented in the form of a software function unit and sold or used as an independent product, the software function unit can be stored in a computer readable storage medium. Based on such understanding, the technical solution of the present disclosure in essence or the part contributing to the related art or part of the technical solution may be embodied in the form of software product, which is stored in a storage medium, includes several instructions for enabling a computer device (which can be a personal computer, a server, a network device, etc.) to perform all or part of the operations of the method according to each embodiment of the present disclosure. The aforementioned storage media include: a U disk, a mobile hard disk, a read-only memory (ROM), a random access memory (RAM), a disk or an optical disk and other media that can store a program code.

[**0383]** The foregoing are only the specific embodiments of the present disclosure, and is not intended to limit the scope of protection of the present disclosure. Any change and replacement easily conceived by those skilled in the art within the technical scope the present disclosure fall with the scope of protection of the present disclosure. Therefore, the scope of protection of the embodiments of the present disclosure shall be subject to the scope of protection of the claims.

## Claims

1. A model performance monitoring method, comprising:
determining, by a first device, a similarity comparison result between an input data set and a training data set of a first model, wherein the similarity comparison result is used for determining a performance of the first model.

2. The method of claim 1, wherein the first model is used for direct positioning/assisted positioning of a first terminal device, and the input data set comprises a measurement parameter associated with a position of the first terminal device.

3. The method of claim 2, wherein the measurement parameter is a measurement parameter between the first terminal device and one or more network devices.

4. The method of claim 2 or 3, wherein the training data set comprises a measurement parameter between a second terminal device and one or more network devices, and label information corresponding to each measurement parameter.

5. The method of claim 3 or 4, wherein the measurement parameter comprises one or more of:
a Channel Impulse Response (CIR);
a Power Delay Spectrum (PDP);
a Time of Arrival (ToA);
a path phase;
an Uplink Time Difference of Arrival (UL TDoA);
a Downlink Time Difference of Arrival (DL TDoA);
an Uplink Angle-of-Departure (UL AoD);
a Downlink Angle-of-Departure (DL AoD);
an Uplink Relative Time of Arrival (UL RTOA);
a Downlink Reference Signal Time Difference (DL RSTD);
a Reference Signal Receiving Power (RSRP);
a Reference Signal Receiving Quality (RSRQ);
an azimuth; and
a zenith.

6. The method of claim 4, wherein in case where the first model is used for direct positioning for the terminal device, label information corresponding to each training data comprises a position of the second terminal device relative to the network device.

7. The method of claim 4, wherein in case where the first model is used for assisted positioning for the terminal device, label information corresponding to each training data comprises one or more of:
a Time of Arrival (ToA), a Downlink Time Difference of Arrival (DL TDoA), a Downlink Angle-of-Departure (DL AoD), a Downlink Reference Signal Time Difference (DL RSTD), an Uplink Time Difference of Arrival (UL TDoA), an Uplink Angle-of-Departure (UL AoD), an Uplink Relative Time of Arrival (UL RTOA), a Reference Signal Receiving Power (RSRP), a Reference Signal Receiving Quality (RSRQ), a line-of-sight/non-line-of-sight (LOS/NLOS) identification and distance information between the second terminal device and the network device.

8. The method of any one of claims 1 to 7, further comprising:
in response to the similarity comparison result indicating that the input data set is similar to the training data set, determining that the performance of the first model satisfies a condition; and
in response to the similarity comparison result indicating that the input data set is not similar to the training data set, updating the first model.

9. The method of any one of claims 1 to 7, wherein the input data set further comprises a measurement parameter associated with a position of a positioning reference unit, and
the method further comprises:
in response to a verification result indicating a success and the similarity comparison result indicating that the input data set is similar to the training data set, determining that the performance of the first model satisfies a condition; and
in response to the verification result indicating a failure and/or the similarity comparison result indicating that the input data set is not similar to the training data set, updating the first model,
wherein the verification result is a result of verifying whether an estimated position of the positioning reference unit is successfully matched with an actual position of the positioning reference unit, and the estimated position is obtained by processing the measurement parameter associated with the position of the positioning reference unit by the first model.

10. The method of claim 9, wherein there are a plurality of positioning reference units,
in response to estimated positions of the plurality of positioning reference units being successfully matched with actual positions of the plurality of positioning reference units, respectively, the verification result indicates a success; or
in response to the number of positioning reference units whose estimated positions are successfully matched with actual positions in the plurality of positioning reference units being greater than a first number, the verification result indicates a success.

11. The method of any one of claims 1 to 10, wherein the similarity comparison result comprises one or more of:
a first comparison result between a statistical parameter of the input data set and a statistical parameter of the training data set; and
a second comparison result between input data in the input data set and training data in the training data set.

12. The method of claim 11, wherein the first comparison result comprises:
a first matching determination result between the statistical parameter of the input data set and the statistical parameter of the training data set; and/or
a first matching degree between the statistical parameter of the input data set and the statistical parameter of the training data set.

13. The method of claim 12, wherein the statistical parameter comprises one or more of following parameters: a variance, a mean, a standard deviation, and a data distribution.

14. The method of claim 12 or 13, wherein
in response to each parameter in the statistical parameter of the input data set being same as a respective parameter in the statistical parameter of the training data set, the first matching determination result indicates matching; and
in response to any one parameter in the statistical parameter of the input data set being different from a respective parameter in the statistical parameter of the training data set, the first matching decision result indicates mismatching.

15. The method of claim 14, wherein data in the training data set satisfies a first distribution,
in response to the number of data satisfying the first distribution in the input data set being greater than or equal to a first threshold, a data distribution of the input data set is same as a data distribution of the training data set; and
in response to the number of data satisfying the first distribution in the input data set being less than the first threshold, the data distribution of the input data set is different from the data distribution of the training data set.

16. The method of claim 14, wherein data in the training data set satisfies a first distribution,
in response to a ratio of the number of data satisfying the first distribution in the input data set to a total number of data in the input data set being greater than or equal to a second threshold, a data distribution of the input data set is same as a data distribution of the training data set; and
in response to a ratio of the number of data satisfying the first distribution in the input data set to a total number of data in the input data set being less than the second threshold, the data distribution of the input data set is different from the data distribution of the training data set.

17. The method of claim 12 or 13, wherein the first matching degree comprises one or more of:
a difference between a variance of the input data set and a variance of the training data set;
a difference between a mean of the input data set and a mean of the training data set; and
a mean square error of the input data set and the training data set.

18. The method of any one of claims 12 to 17, wherein
in response to the first matching determination result indicating matching and the first matching degree being greater than or equal to a third threshold, the first comparison result indicates similarity; and
in response to the first matching determination result indicating mismatching and/or the first matching degree being less than the third threshold, the first comparison result indicates dissimilarity.

19. The method of claim 11, wherein the second comparison result comprises:
a second matching determination result between the input data in the input data set and the training data in the training data set; and/or
a second matching degree between the input data in the input data set and the training data in the training data set.

20. The method of claim 19, wherein
in response to the number of input data in the input data set that are identical to training data in the training data set being greater than or equal to a fourth threshold, the second matching determination result indicates matching; and
in response to the number of input data in the input data set that are identical to training data in the training data set being less than the fourth threshold, the second matching determination result indicates mismatching.

21. The method of claim 19, wherein
in response to a ratio of the number of input data in the input data set that are identical to training data in the training data set to a total number of input data in the input data set being greater than or equal to a fifth threshold, the second matching determination result indicates matching; and
in response to a ratio of the number of input data in the input data set that are identical to training data in the training data set to the total number of input data in the input data set being less than the fifth threshold, the second matching determination result indicates mismatching.

22. The method of claim 19, further comprising
for each input data in the input data set, comparing the input data with a plurality of training data in the training data set to obtain a matching degree of the input data,
wherein in response to the number of input data having a matching degree greater than a sixth threshold in the input data set being greater than or equal to a seventh threshold, the second matching determination result indicates matching; and
in response to the number of input data having the matching degree greater than the sixth threshold in the input data set being less than the seventh threshold, the second matching determination result indicates mismatching.

23. The method of claim 19, wherein the second matching degree comprises:
a proportion of the number of input data in the input data set having a matching degree greater than a fifth threshold to a total number of input data in the input data set; or
a proportion of input data in the input data set identical to training data in the training data set to the total number of input data in the input data set.

24. The method of any one of claims 19 to 23, wherein
in response to the second matching determination result indicating matching and the second matching degree being greater than or equal to a third threshold, the second comparison result indicates similarity; and
in response to the second matching determination result indicating mismatching and/or the second matching degree being less than the third threshold, the second comparison result indicates dissimilarity.

25. The method of any one of claims 11 to 24, wherein
in response to the first comparison result and the second comparison result each indicates similarity, the input data set is similar to the training data set; and
in response to the first comparison result and/or the second comparison result indicates dissimilarity, the input data set is not similar to the training data set.

26. The method of any one of claims 8 to 10, wherein the similarity comparison result comprises a first matching degree between a statistical parameter of the input data set and a statistical parameter of the training data set, and/or a second matching degree between data in the input data set and data in the training data set, and
the updating the first model comprises:
in response to the first matching degree and/or the second matching degree being less than a third threshold and greater than or equal to an eighth threshold, fine-tuning, by the first device, a model parameter of the first model; and
in response to the first matching degree and/or the second matching degree being less than the eighth threshold, switching, by the first device, the first model.

27. The method of any one of claims 1 to 26, wherein the first device is a network device, the first model comprises one or more sub-models, the one or more sub-models are deployed at a plurality of transmission/reception points (TRPs), and the method further comprises:
determining, by the first device, a similarity comparison result between an input data set and a training data set of each sub-model; and
in response to similarity comparison results between input data sets and training data sets of the sub-models deployed on a part of the plurality of TRPs indicating that the input data sets of the sub-models are not similar to the training data sets of the sub-models, updating the sub-models deployed on the part of the plurality of TRPs.

28. The method of claim 27, wherein the first model comprises N sub-models, the N sub-models are deployed in N TRPs, N is an integer greater than 1, and
an input data set of each sub-model comprises a measurement parameter of the TRP in which the respective sub-model is deployed.

29. The method of claim 27, wherein the first model comprises N sub-models, N is an integer greater than 1, the N sub-models are deployed in M TRPs, M is an integer greater than N, and at least part of the M TRPs share a same sub-model; and
an input data set of each sub-model comprises one or more measurement parameters of one or more TRPs in which the respective sub-model is deployed.

30. The method of claim 28 or 29, wherein the first model comprises N different sub-models, and the different sub-models have different training data sets.

31. The method of claim 28 or 29, wherein the first model comprises N identical sub-models, and the N identical sub-models have identical training data sets.

32. The method of claim 27, wherein the first model comprises one sub-model, the plurality of TRPs share the one sub-model, and
an input data set of the sub-model comprises a measurement parameter of each of the plurality of TRPs.

33. The method of any one of claims 1 to 26, wherein the first device is a first terminal device, and the method further comprises:
receiving, by the first device, first information transmitted by a network device, wherein the first information is used for configuring information for monitoring the first model, and the input data set is measured based on the information.

34. The method of claim 33, wherein the first information comprises one or more of:
a reference signal type, a measurement type, and trigger information, wherein the trigger information is used for triggering monitoring a performance of the first model.

35. The method of claim 34, wherein the reference signal type comprises:
a positioning reference signal (PRS), a synchronization signal block (SSB), and a sounding reference signal (SRS).

36. The method of claim 34, wherein the measurement type comprises:
periodic measurement, aperiodic measurement, semi-persistent measurement, or time-window measurement.

37. The method of any one of claims 1 to 26 or claims 33 to 36, wherein the first device is a first terminal device, and the method further comprises:
receiving, by the first device, second information transmitted by a network device, wherein the second information is used for configuring the input data set and/or the training data set of the first model.

38. The method of any one of claims 1 to 26 or claims 33 to 37, wherein the first device is a first terminal device, and the method further comprises:
transmitting, by the first device, the similarity comparison result between the input data set and the training data set of the first model to a network device.

39. The method of any one of claims 1 to 26 or claims 33 to 38, wherein the first device is a first terminal device, and the method further comprises:
receiving, by the first device, third information transmitted by a network device, wherein the third information is used for indicating updating the first model.

40. A device for monitoring a model, comprising:
a determination unit configured to determine a similarity comparison result between an input data set and a training data set of a first model, wherein the similarity comparison result is used for determining a performance of the first model.

41. A device comprising: a memory, a processor and a transceiver,
wherein the transceiver is configured to implement a communication with a terminal device;
the memory is configured to store a computer program capable of running on the processor; and
the processor is configured to, when performing the program with combination of the transceiver, implement the method of any one of claims 1 to 39.

42. A computer storage medium having one or more programs stored therein, wherein the one or more programs are executable by one or more processors to implement the method of any one of claims 1 to 39.

43. A chip, comprising a processor, wherein the processor is configured to call and run a computer program from a memory to cause a device installed with the chip to perform the method of any one of claims 1 to 39.

44. A computer program product comprising a computer storage medium having a computer program stored therein, wherein the computer program comprises instructions executable by at least one processor, and the instructions, when executed by the at least one processor, implement the method of any one of claims 1 to 39.

45. A computer program, wherein the computer program enables a computer to perform the method of any one of claims 1 to 39.
